# EUROPEAN PATENT SPECIFICATION

(11) **EP 2 823 390 B1**
(45) Date of publication and mention of the grant of the patent: **20.05.2020**
(21) Application number: 13758388.6
(22) Date of filing: 05.03.2013
(51) Int. Cl.: G06F 3/12, B41J 29/38, G06F 9/48, H04N 1/00

(54) **JOB PROCESSING SYSTEM, JOB PROCESSING METHOD, AND PROGRAM**
AUFTRAGSVERARBEITUNGSSYSTEM, AUFTRAGSVERARBEITUNGSVERFAHREN UND PROGRAMM
SYSTÈME DE TRAITEMENT DE TÂCHE, PROCÉDÉ DE TRAITEMENT DE TÂCHE, ET PROGRAMME

(30) Priority: 08.03.2012 JP 2012052132
(43) Date of publication of application: 14.01.2015
(73) Proprietor: Ricoh Company, Ltd., Tokyo 143-8555 (JP)
(72) Inventor: SOYAMA, Takashi, Tokyo, 143-8555 (JP); TSUKAHARA, Mina, Tokyo, 143-8555 (JP)
(74) Representative: White, Duncan Rohan
(86) International application number: PCT/JP2013/056554
(87) International publication number: WO 2013/133438

(56) References cited:
- JP-A- 2000 076 083
- JP-A- 2000 076 083
- JP-A- 2003 125 123
- JP-A- 2006 024 989
- JP-A- 2011 255 516
- US-A1- 2005 088 668
- US-A1- 2005 254 083
- US-A1- 2008 055 636

## Description

### TECHNICAL FIELD

The present invention relates to job processing systems, job processing methods, and programs that make it possible to cause job processing to wait until a preceding job is processed by registering a job accepted.

### BACKGROUND ART

As equipment units having a function to process image data, a copying machine, a printer, a scanner, a facsimile machine (below called " a FAX"), a multi-functional machine, and a computer, etc., which have installed thereon an application for image processing.

The above-described equipment units which cause an image processing function to work in response to a job request takes a form such that operating units which issue a command are integrated and are configured as a single unit image processing apparatus. In addition, a client machine and a job processing machine nowadays take a form such that they are separate and the respective apparatuses are mutually connected by a communications unit to provide a configuration (including a network).

For example, in an image forming apparatus such as a printer, a multi-functional machine, etc. , a command in which a job is requested is received via a network, and when the command reception is completed and the command is accepted as the job, it is registered in a job list, which registering in the job list makes it possible to cause job processing to wait until a preceding job is processed by registering in the job list, and jobs which are registered in the job list are successively executed. Similarly, a job is registered in response to a processing request command from an operation unit which is provided in the apparatus.

In such an image forming apparatus, a function is known such that a stop command by pressing down, etc., of a step key provided in the operating unit is accepted, making it possible to stop or discontinue job processing in response to the command accepted.

Related arts concerning functions of stopping and discontinuing a job by a stop key include Patent document 1 (JP2000-76083A).

Patent document 1 discloses an image forming apparatus which makes it possible to cause settings on job types of unconditionally discontinuing; temporarily stopping; and continuing execution as it is when a stop key is pressed down to be stored to specify an operation when the stop key is pressed in accordance with the job types.

However, according to the functions of discontinuing and stopping the job as disclosed in Patent Document 1, a job for processing execution may be stopped by pressing down the stop key is restricted to what is registered in a job list at the time the stop key is pressed down.

For example, when the stop key is pressed down by a user in an attempt not to stop executing a job immediately after the job is transmitted from the client machine side which is connected via a network, at a timing such that receiving of the job has not been completed at the image forming apparatus side, the job is not yet registered in the job list, so that it is not possible to stop executing this job by pressing down the stop key. In other words, when the unregistered job type happens to correspond to a predetermined job type in which processing is stopped when the stop key is pressed down, job processing is stopped as a result. However, a problem occurs such that, when it is a job which does not correspond to the job type in which processing is stopped at the time, a process of registering in the job list is performed, so that execution of processing of the job is started against the intention of the user.

JP2000076083A discloses storing different types of job and acting on a job stopping command in accordance with the job type, to stop the job permanently or temporarily or to continue the job. Further prior art is known from documents US 2008/055636 A1, US 2005/088668 A1 and US 2005/254083 A1.

### SUMMARY OF THE INVENTION

### MEANS FOR SOLVING THE PROBLEMS

An object of the present invention is to provide a job processing system which makes it possible to cause job processing to wait until a preceding job is processed by registering a job accepted, making it possible to ensure that processing of a job to be a target job may be stopped in an easy procedure.

The present invention provides a job processing system, including a job accepting unit which accepts a job; a job registering unit which registers the job accepted by the job accepting unit; a job processing unit which performs processing of the job registered in the job registering unit; a stopping command accepting unit which accepts a processing stopping command for the job; and a control unit which performs control in which registering is postponed for the job which is in a process of being registered in the job registering unit when the stopping command accepting unit accepted the processing stopping command.

The present invention makes it possible to ensure that job processing to be instantaneously subjected in an easy procedure of operating a stop key when processing on an already accepted job is stopped. The present invention is defined by the subject matter of the appended claims.

### BRIEF DESCRIPTION OF THE DRAWINGS

FIG. 1 is a diagram illustrating a hardware configuration of an MFP according to Embodiments of the present invention;
FIG. 2 is a diagram illustrating a software configuration of the MFP according to the Embodiments of the present invention;
FIG. 3 is a diagram for showing a module configuration of a job stopping control system and explaining an operation thereof;
FIG. 4 is a flow diagram illustrating a mode transitioning procedure performed by an application which accepts a new printing job stopping request;
FIG. 5 is a flow diagram illustrating a mode transitioning procedure performed by an application in a new printing job stop state;
FIG. 6 is a flow diagram illustrating a job stopping control procedure which is executed by an application by transitioning an operation mode to the new printing job stop state;
FIG. 7 is a diagram illustrating a software configuration of an image processing system in which an external controller is connected to the MFP (FIG. 2);
FIGS. 8A and 8B are diagrams for explaining an operation of the job stopping control system according to Example 2;
FIG. 9 is a table illustrating whether to accept stop key and cancel operations with respect to stopping control in correspondence with types of applications;
FIGS. 10A and 10B are sequence diagrams in a case in which a displayed application (copying) is executing a printing job for which a stopping request can be accepted (a copying job);
FIGS. 11A and 11B are diagrams for explaining transitioning of a screen displayed in an operation unit in an exemplary operation in FIGS. 10A and 10B;
FIGS. 12A and 12B are sequence diagrams in a case in which a displayed application (scanner) is executing a job for which the stopping request can be accepted (a reading job);
FIGS. 13A and 13B are diagrams for explaining transitioning of the screen displayed in the operation unit in an exemplary operation in FIGS. 12A and 12B;
FIGS. 14A and 14B are sequence diagrams in a case in which a displayed application (FAX) is executing a job for which the stopping request cannot be accepted (a printing job);
FIGS. 15A and 15B are sequence diagrams in a case in which a FAX application, which is other than a displayed application (copying), is executing a job for which the stopping request cannot be accepted (a printing job) ;
FIGS. 16A and 16B are diagrams for explaining transitioning (an exemplary operation 5) of an operation display screen in a control operation by a stop key;
FIGS. 17A and 17B are diagrams for explaining transitioning (an exemplary operation 6) of an operation display screen from a home screen in a control operation by the stop key;
FIG. 18 is a diagram for explaining transitioning (an exemplary operation 7) of the operation display screen in the control operation by the stop key;
FIG. 19 is a diagram illustrating an operation when a displayed application is an SDK application and an MFP browser; and
FIG. 20 is a diagram for explaining transitioning of a display screen by a job delete operation on a printing job list screen.

### MODE FOR CARRYING OUT THE INVENTION

Embodiments of the present invention are explained with reference to drawings.

Below, Embodiments of a job processing system according to the present invention are explained, taking an MFP (a multi-functional printer) which accepts a job via a command issued by an external client machine (a PC, for example) and an operation unit (an instruction by a key entry) and which performs processing using various combined image processing functions in accordance with job instructions as an example.

A configuration of an apparatus which causes a job processing function to work in response to a job request takes a form in which a command can be received from both an operation unit such as a key input, etc., and an external client machine as well as a form in which operation units such as the key input, etc. , are integrated to form a single unit apparatus, or a so-called client server system, which is configured with respectively separate apparatuses of the client machine and a processing machine which performs a process of accepting the job, the apparatuses being mutually connected via a communications unit. Here, apparatus configurations having these forms are collectively conceptualized as "a job processing system".

### (Overview of hardware configuration)

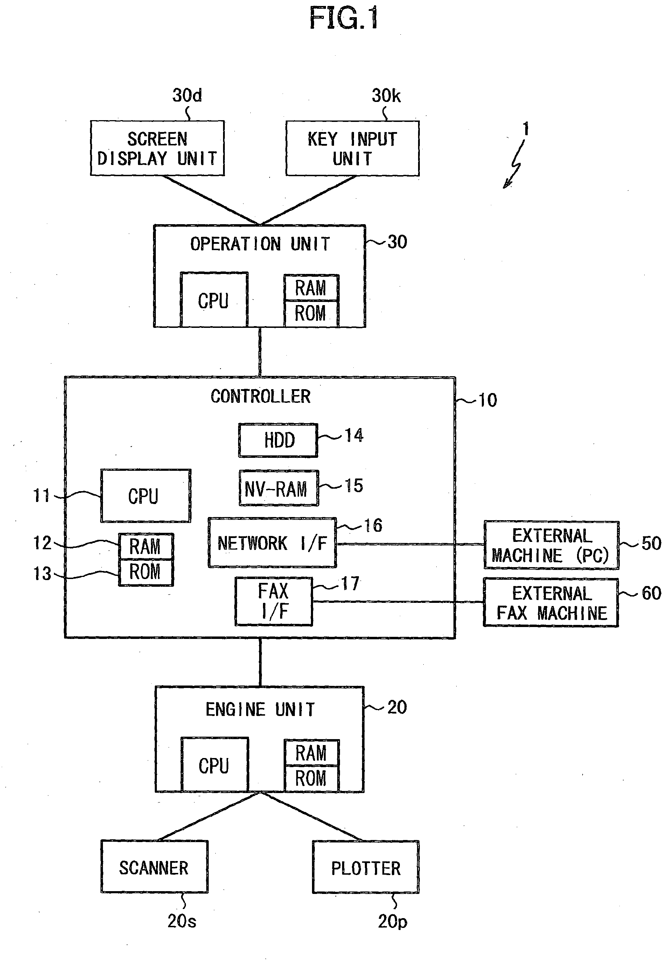

FIG. 1 is a diagram illustrating a hardware configuration of an MFP 1 according to Embodiments of the present invention.

The present MFP 1 includes a controller 10 which controls the overall MFP 1; an engine unit 20 which performs control, etc., of operations of a scanner 20s which reads a manuscript image and a plotter 20p which forms an image onto a recording sheet based on image data for outputting; and an operation unit 30 which includes a screen display unit 30d and a key input unit 30k and which provides a function as a user interface.

The controller 10 includes, as constituting elements, a CPU (central processing unit) 11 for executing software program instructions; a ROM (Read Only Memory) 13 which saves control data, programs, etc., for use in image processing, control, etc. , that are used by the CPU 11 in order to operate the controller 10; a RAM (Random Access Memory) 12 which is used as a work memory which temporarily saves output image data generated by the control program, or which saves data needed for an operation of a software program; a NV (Non Volatile)-RAM 15, which is a non-volatile memory in which are saved setting data such as processing conditions, etc., which depend on equipment units, management information on an apparatus (the MFP 1), etc.; and an HDD 14 (hard disk), a large capacity storage apparatus which saves programs, etc, and accumulates image data. In other words, the controller 10 includes a computer which includes respective elements of the CPU 11; the ROM 13; the RAM 12; the NVRAM 15; and the HDD 14.

Moreover, the controller 10 includes, as constituting elements, a network I/F (interface) 16 for exchanging data with an external machine 50 such as a PC (personal computer), etc., which may function as a client machine; and a FAX I/F 17 for exchanging data with an external FAX machine. The above-described respective elements which make up the controller 10 are respectively connected via a bus (not shown).

Furthermore, the respective units of the engine unit 20 and the operation unit 30, which are configured with a computer including a CPU, a ROM, a RAM, etc., and which performs inter-computer communications with the controller 10, control elements under control. In other words, the engine unit 20 controls the scanner 20s and the plotter 20p, while the operation unit 30 controls the screen display unit 30d and the key input unit 30k.

The controller 10 accepts a command issued through the operation unit 30 or a command issued by the external machine 50, and executes job processing instructed in the command using an installed application for image processing that will be described below in Software configuration.

In the MFP 1, multiple types of jobs that are processed using different applications are requested and, depending on the application, a common hardware unit for use in processing (for example, the plotter 20p for use in outputting) is used, so that the controller 10 manages the processing in units of jobs, ensuring that idle time is eliminated as much as possible and processing is performed efficiently.

### (Software configuration)

The controller 10 installs the respective applications of "copying", "printer", "FAX", "scanner", and "SDK" as applications for image processing, accepts a command which is issued through the operation unit 30, and executes image processing using an application instructed in a command as a job for which processing is requested. Moreover, similarly for the command issued by the external machine 50, image processing is executed using the respective applications of "printer", "FAX", "scanner", and "SDK" in accordance with instructions in the command accepted.

In this way, in the MFP 1, multiple types of jobs that are processed using different applications are requested, and a job which is accepted is caused to stand by in a state of waiting to be processed until a preceding job is completed in case there is a preceding job which is of the same type or which uses the same hardware unit, so that the controller 10 registers the accepted job, manages the operation process of each job to be processed, causing the processing to proceed smoothly. Here, registering a job means assigning a job ID which identifies the job for each of the jobs, and, for each of the jobs identified with the job ID, storing, in a format such as a list, etc. , in which can be searched various management information sets (below called "job information") for use in managing jobs to be processed, such as a type of processing (application) requested, a processing state (a state in which processing proceeds, such as standing by, executing, etc.), etc.

The controller 10 which performs such job management as described above is a component in accordance with the present invention, so that a software configuration will be described principally with respect to this point.

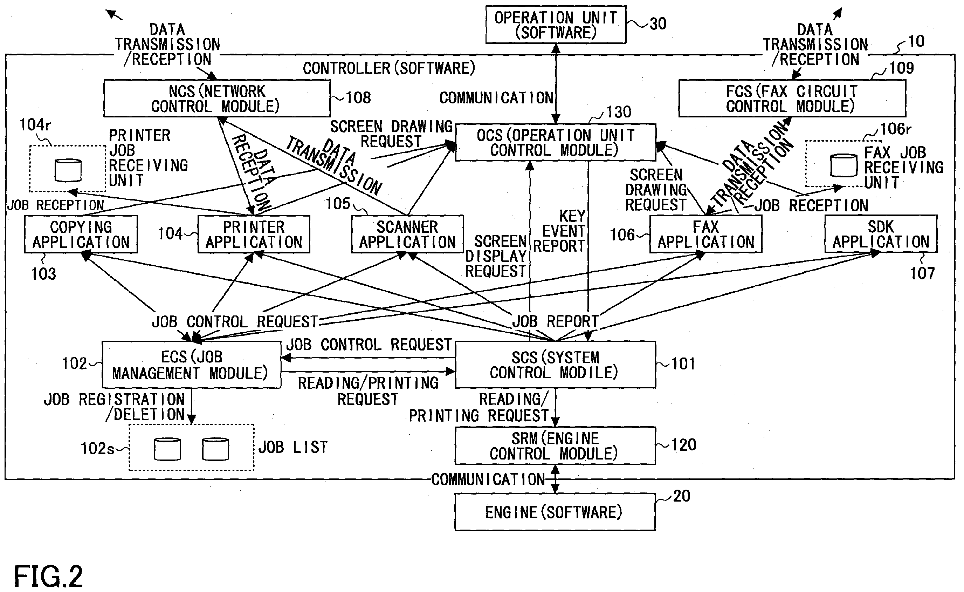

FIG. 2 is a diagram illustrating a software configuration of the MFP 1 according to the Embodiments of the present invention.

In FIG. 2, a module configuration of the controller 10 includes, as elements, respective applications of a copying application 103; a printer application 104; a scanner application 105; a FAX application 106; and an SDK (software development kit) application 107 as applications for image processing; an OCS (operation unit control module) 130 which exchanges data with the operation unit (software) 30; an NCS (network control module) 108 which exchanges data with a network which is connected to the external machine 50 such as the PC, etc.; an FCS (FAX circuit control module) 109 which exchanges data via a circuit with the external FAX machine 60; an SRM (engine control module) 120 which exchanges data with the engine unit (software) 20; an SCS (system control module) 101 which accepts a job to be processed with a command received as a key event from the OCS 130, which delivers job information to a below-described ECS 102, and which also controls the engine unit 20 via the SRM 120; and the ECS (job management module) 102 which receives, as a job control request, information necessary for job management from the SCS 101 and the respective applications 103-107 for image processing, and registers and manages a job to be processed.

Moreover, the ECS 102 includes a job list 102s as a constituting element, and stores job information on a job registered therein. For the job list 102s, further explanations will be provided in the below-described operations.

Furthermore, the printer application 104 stores job data received here with the printer job receiving unit 104r under control thereof. The FAX application 106 stores job data received here with the FAX job receiving unit 106r under control thereof.

The SDK application 107 is an application for extension that is developed in a C language or Java (registered trademark).

With reference to FIG. 2, an operation at a time of executing image processing in the present MFP 1 is explained.

Once a command is issued which requests various processes by a key operation in the key input unit 30k (FIG. 1) of the operation unit 30, the operation unit (software) 30 reports the key event to the SCS 101 via the OCS 130.

The SCS 101, which received the report determines a type of the command to accept a job to be processed, and reports the job to be processed to a module corresponding to the request (e.g., to an application applicable if it is for an application displayed in the screen display unit 30d of the operation unit 30).

The copying application 103, the FAX application 106, the scanner application 105, the SDK application 107, etc., that received a report of the job to be processed based on the key event requests the ECS 102, with the key event as a trigger, registering of a job for which a request is made for reading by the scanner 20s or printing by the plotter 20p (a request for job control in FIG. 2 is made).

The printer application 104 starts job receiving with the printer job receiving unit 104r with a report of data reception from the NCS 108 as a trigger and determines a type of a command indicated in the received data to request registering of the job to the ECS 102 at a timing it could be determined that it was a job requesting printing. The printer application 104 manages the printer job receiving unit 104r, so that job information held by the printer job receiving unit 104r is deleted when reception is completed.

The FAX application 106 starts job receiving with the FAX job receiving unit 106r with data reception from the FCS 109 as a trigger and determines a type of a command indicated in the received data to request registering of the job to the ECS 102 at a timing it could be determined that it was a job requesting printing. The FAX application 106 manages the FAX job receiving unit 106r, so that job information held by the FAX job receiving unit 106r is deleted when reception is completed.

The ECS 102, to which registering of jobs is requested from each application, assigns a job ID to the respective jobs to register the jobs in the job list 102s and reports the job ID to the requesting application.

In the ECS 102, processing of a job which requests reading or printing is executed by an operation of the engine unit 20, so that, as reading and printing requests, job processing execution is requested to the engine unit (software) 20 via the SCS 101 and SRM 120 in response to an operation condition reported from the SCS 101 which controls the engine unit 20 via the SRM 120.

### (Job stopping control)

Next, a description is made of a job stopping control which is performed by a controller 10 of the present MFP 1 when it receives a stopping command.

As a procedure for stopping job processing, an example is explained in which a stopping command is issued to the controller 10 by an operation in which a user presses down a stop key provided in the operation unit 30. This procedure may be performed by receiving a stopping command which is issued from the external (client) machine 50 such as a PC, etc., and which is transmitted via the network I/F 16.

In the present MFP 1, the controller 10 which receives a stopping command issued by pressing down a stop key performs the below-described "Operation 1" and "Operation 2" as stop control operations.

The "Operation 1" is an operation which, when a stop key is pressed down, causing the stopping command to be effective, causes job registration to be postponed for a job which is in the process of being registered in the job list 102s and which is unregistered.

The "Operation 2" is an operation which, when the stop key is pressed down, causing the stopping command to be effective, causes processing on all printing jobs registered in the job list 102s to be stopped.

Pressing down of the stop key in the Operations 1 and 2 that cause the stopping command to be effective is a stop key operation which is performed on the assumption that there is an image processing request command (job) which has already been accepted and for which some processing is performed. Moreover, the printing job in the Operation 2 is a job which causes the plotter 20p to be operated.

The Operations 1 and 2 are operations which are intended to ensure that instantaneous stopping is performed of processing on a job to be processed in an easy procedure of stopping a job in response to a stop command which is issued by pressing down the stop key.

Below, Embodiments of the Operations 1 and 2 are described below as an "Embodiment 1" and an "Embodiment 2".

### "Embodiment 1"

In job stopping control according to the present Embodiment, if there is an image processing request command (job) which has already been accepted and for which some processing is performed, or if there is a job registered in the job list 102s, when a stop key is pressed down, a control operation is performed in which job registration for a job which is not yet registered in the job list 102s or for an unregistered job is not performed, but postponed even for an accepted job.

This control operation is to avoid a problem which may occur due to stopping control performed in the related art when a stopping command is issued by pressing down the stop key, or, in other words, due to stopping control performed in a manner restricted to an application being executed, or to a job registered in the job list 102s. In other words, this is an operation to prevent a problem in the stopping control in the related art such that an unregistered job, which is in the process of an operation such as receiving of a printing job (command), etc., and which does not reach registering in the job list 102s, is not subjected to stopping control, so that stopping control is not applied and the process of registering the unregistered job in the list proceeds, and processing is caused to start against the intensions of the user while stopping control is not applied.

Below, a control operation of the present Embodiments is explained with a printing job in a state such that reception of a printing command has not been completed as an example. In a sense that the printing job is a job which causes the plotter 20p to be operated, a job which uses the copying application 103 applies to the printing job. However, in a job of the copying application 103, a stop key operation normally is not caused to be effective in an unregistered job state. However, when a similar state occurs, a control operation similar to an example shown below may be performed.

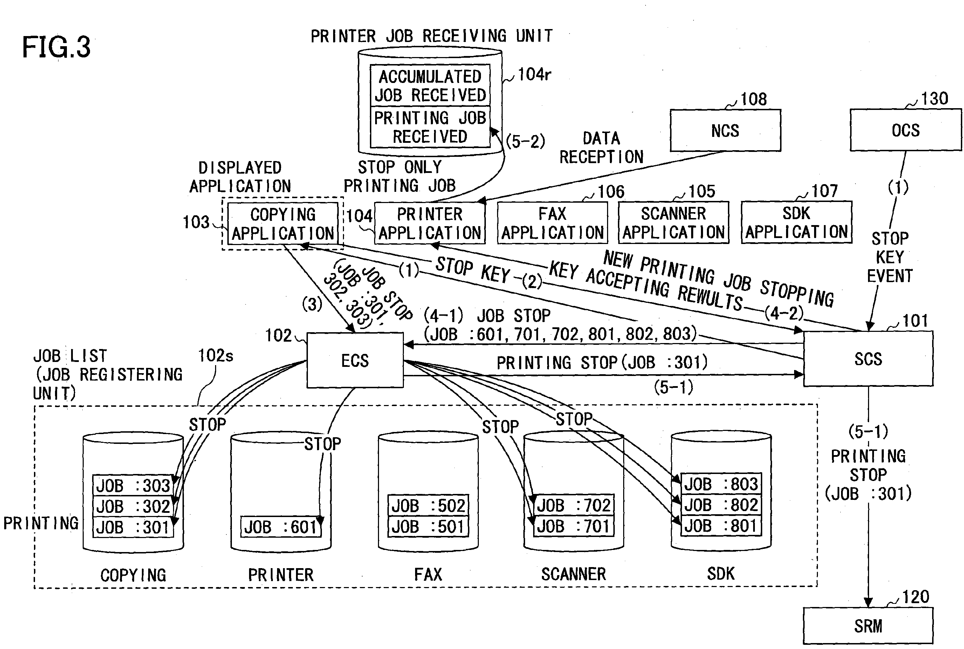

FIG. 3 is a diagram for showing a module configuration of a job stopping control system according to the present Embodiment and explaining an operation thereof. While there are data (information) and a flow thereof that have been added for explaining a control operation of the present Embodiment, the module configuration itself is basically the same as in FIG. 2, so that a preceding explanation in FIG. 2 is to be referred to for those modules which are identical.

Here, with reference to FIG. 3, a configuration and an operation thereof are explained for implementing stopping control for all jobs including a printing job for which receiving of a printing command (job) has not been completed. The operation proceeds in the order of (1), (2), (3), ..., which are added to an arrow which shows a flow of data (information) in FIG. 3, so that the operation is explained below in accordance with the order:
(1) When the stop key in the key input unit 30 k of the operation unit 30 is pressed down, a stop key event which shows a stopping command is reported from the OCS 130 to the SCS 101. The SCS 101, which received the report, reports the key event to an application displayed in the screen display unit 30d of the operation unit 30 (the copying application 103 in FIG. 3) as an application concerning the processing based on a determination that the stop key is effective when there is an application which performs some job processing. Here, for the screen display unit 30d, an example is adopted such that a screen of an application which executes job processing is displayed, so that reporting is made to the copying application 103 in an example in FIG. 3 in which the copying application 103 is executed.
(2) The displayed application which receives the key event (the copying application 103 in FIG. 3) determines whether a job of an own application can be stopped and reports to the SCS 101 that the stop key has been accepted. Whether the job can be stopped is determined based on a job execution state, etc. Stopping may not be possible immediately before job execution is completed, so that whether the job can be stopped is determined in accordance with predetermined conditions for determining that it cannot be stopped.
(3) In (2) in the above, when a response that it can be stopped is made to the SCS 101, the displayed application (the copying application 103 in FIG. 3) requests job stopping to the ECS 102, specifying a job ID of an own application (copying jobs 301, 302, 303 in FIG. 3) registered in the job list 102s.
(4-1) The SCS 101, which received that it can be stopped from the displayed application in the above-described (2) specifies a job ID for a job to be stopped out of jobs registered in the job list 102s (a printer job 601; scanner jobs 701, 702; and SDK jobs 801, 802, 803 in FIG. 3) to request job stopping to the ECS 102. The job for the FAX application 106 is excluded from what is to be stopped.
(5-1) When there is a job being executed out of what are registered in the job list 102s, the ECS 102, which receives a job stopping request, causes a job (the copying job 301 in FIG. 3) operated by the scanner 20s or the plotter 20p that is being executed in the engine unit 20 via the SCS 101 and the SRM 120 to be stopped. Moreover, when there is a standby job (the copying jobs 302, 303; the printer job 601; the scanner jobs 701, 702; and the SDK jobs 801, 802, 803 in FIG. 3) which is registered in the job list 102s, the job state is transitioned to a stop state.

The above-described operations of (4-1) and (5-1) are operations when a job which is being executed or which is standing by that is registered in the job list 102 is stopped.

On the other hand, an operation for stopping processing of a printing job (command) for which receiving via the network I/F 16 has not been completed and which is not registered in the job list 102s at the time the stop key is pressed down will be as follows:
(4-2) The SCS 101, which receives that it can be stopped from the displayed application in (2), requests new printing job stopping to the printer application 104 which registers in a job list and executes a printing job (command) which is received via the network I/F 16 from the external machine 50 such as the PC, etc., for example.
(5-2) The printer application 104, which received the request, transitions to the new printing job stop state, so that registering in the job list 102s is postponed to keep received data held in the printer job receiving unit 104r even when the printer job receiving unit 104r completes receiving the printer job thereafter.

As described above, when an operation of a stop key is accepted, registering in the job list is postponed for the received job, so that registering in the job list is prevented until the postponement is revoked even for a job which was not registered at the time the stopping request was accepted, making it possible to ensure that job execution is stopped.

Moreover, jobs which request printing that are received via the network I/F 16 in FIG. 3 includes, for example, a printing job which executes printing and an accumulating job which executes accumulating into an equipment unit, such as a timer job which is first accumulated and in which printing is automatically executed with a timer at a time specified). Thus, the printer application 104 postpones registering in the job list 102s for a printing job, while it may postpone registering for an accumulating job by continuing accumulating.

A stop state in which executing of a job registered in the job list 102s is stopped and a stop state in which registering in the job list 102s from the printer job receiving unit 104r is postponed are revoked based on a canceling request which is accepted by pressing down a cancel button provided in the key input unit 30k of the operation unit 30 or the screen display unit 30d of the operation unit 30, for example.

### (Job stopping process in application)

Now, processing performed for executing a job stopping operation by an application which processes a printing job, such as the copying application 103, the printer application 104, etc., in the job stopping control operation according to the present embodiment that is explained with reference to FIG. 3 is explained.

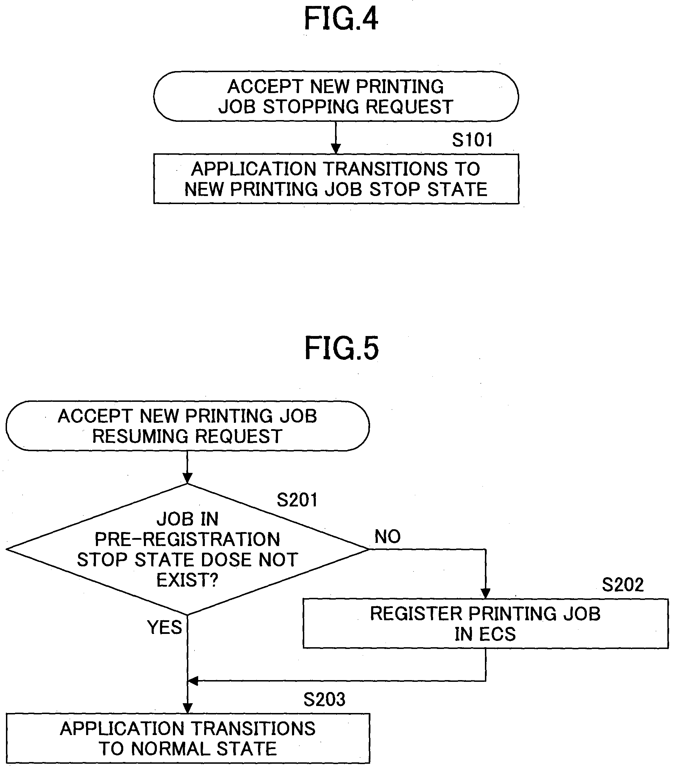

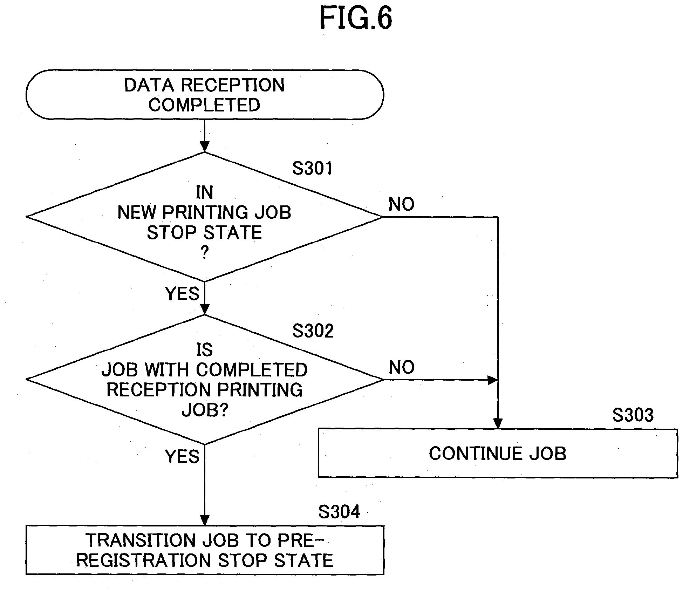

The processing performed by the application is processing for performing mode transitioning (below-described processing in FIGS. 4 and 5) which are performed in response to a new printing job stopping request which is determined and reported based on a printing job state when the SCS 101 accepted the stop key or in response to a new printing job resuming request which is determined and reported by the SCS 101 based on a printing job state after the new printing job stopping, as well as a job stopping control operation (below-described processing in FIG. 6) which is executed by mode transitioning to the new printing job state.

FIG. 4 is a flow diagram illustrating a procedure of mode transitioning performed by an application which accepts a new printing job stopping request.

In an exemplary stopping control operation which was explained with reference to FIG. 3, as described in (4-2), the procedure in FIG. 4 is performed by the printer application 104 when a request is received, which request is made from the SCS 101 to the printer application 104 for new printing job stopping.

According to a flow in FIG. 4, when the new printing job stopping request from the SCS 101 is accepted, an application which processes the printing job (the printer application 104 in FIG. 3) transitions the operation mode to the new printing job stop state (step S101). In the new printing job stop state, received data are kept held in the printer job receiving unit 104r, postponing registering in the job list 102s even when the printer job receiving unit 104r has completed receiving the printer job.

The new printing job stopping state, to which transitioning is made, continues until this state is transitioned to an original normal state and revoked.

FIG. 5 is a flow diagram illustrating a procedure of mode transitioning performed by an application in the new printing job stop state.

In the example in FIG. 3, the procedure in FIG. 5 is performed by the printer application 104 when the application which transitioned to the new printing job stop state received a new printing job resuming request from the SCS 101. The new printing job resuming request is performed by the SCS 101 in accordance with job processing stop revoking which is performed based on a canceling request accepted by pressing down a cancel button provided in the operation unit 30.

According to the flow in FIG. 5, when the printing job resuming request is accepted from the SCS 101, the application which processes the printing job (the printer application 104 in FIG. 3) starts processing according to this flow, and first checks whether there is a job which is in a new printing job stop state and which is left unregistered in a stop state in the job list 102s of the ECS 102 (step S201). In the example in FIG. 3, the checking is done according to whether job data being received remain in the printer job receiving unit 104r.

If there is no job in the stop state in step S201 (YES in step S201), the operation mode is transitioned to a normal state in which job processing may be executed from the new printing job stop state (step S203).

On the other hand, if there is a job in the stop state in step S201 (NO in step S201), the job which is left unregistered in the stop state is registered in the job list 102s of the ECS 102 (step S202) and the operation mode is transitioned to a normal state in which job processing may be executed from the new printing job stop state (step S203).

The normal state, to which transitioning is made, continues until this state is transitioned to the new printing job stop state.

FIG. 6 is a flow diagram illustrating a job stopping control procedure which is executed by an application by transitioning an operation mode to the new printing job stop state.

In the procedure for stopping control in FIG. 6, which is a procedure performed assuming execution of the above-described transitioning to the new printing job stop state (FIG. 4) and transitioning from the new printing job stop state back to the normal state (FIG. 5), processing by according to the flow is started with completion of receiving in the printer job receiving unit 104r as a trigger.

According to the flow in FIG. 6, an application (the printer application 104 in FIG. 3) which processes a printing job determines whether an own application is in a new printing job stop state when receiving of printing job data is completed (step S301).

If it is in a normal state in step S301 (NO in step S301), the job processing continues (step S303).

On the other hand, if it is in the new printing job stop state in step S301 (YES in step S301), it is determined whether a job which completed receiving is a printing job (step S302).

If it is not a printing job in step S302 (NO in step S302), the job processing continues (step S303).

Moreover, if it is a printing job in step S302 (YES in step S302), it is in a new printing job stop state, so that registering in the job list 102 of the printing job for which receiving has been completed is postponed to leave received data held in the printer job receiving unit 104r.

The printing job which is left unregistered is kept in this state until it returns to the normal state by a new printing job resuming request (step S304).

### (Dealing with other unregistered jobs)

In the explanation of the Embodiment 1 thus far, an operation has been explained of postponing registering of a job with a printing job using the printer application 104 for which receiving has not been completed as an unregistered job.

A job for which registering is to be postponed is not limited to the above-described printing jobs. Thus, examples of applying to jobs in (1) to (3) below other than the printing job are explained.

### (1) FAX receiving job

In a sense that the printing job is a job which causes the plotter 20p to be operated, the FAX receiving job of the FAX application 106 falls hereinto.

Therefore, as the FAX receiving job, for which receiving has not been completed by the FAX job receiving unit 106r, may also become an unregistered job, registering of such a job may be postponed to make it a subject of a job stopping control operation.

The job stopping control operation for the FAX receiving job may be carried out by a control operation similar to a case for a printing job which uses the above-described printer application 104.

### (2) scanner job

A scanner job which accumulates scanning data for use in scanner transmission, etc. , performed using the scanner application 105 may become an unregistered job. In other words, while a job which reads a manuscript by the scanner 20s prior to scanner transmission, etc., and accumulates read data in the RAM 12 or the HDD 14 of the MFP 1 is registered in the job list 102s as a scanner job by the scanner application 105, the scanner job becomes an unregistered job since it is not registered in the job list 102s if reading of a manuscript by the scanner 20s has not been completed at the time of pressing down the stop key. The RAM 12 or the HDD 14 of the MFP 1 that accumulates read manuscript data by the scanner application 105 corresponds to the printer job receiving unit 104r in the above-described exemplary operation of the printer application 104.

An operation is provided which applies stopping control on such an unregistered scanner job by pressing down the stop key. For example, it is performed as an operation which applies stopping on a transmission job such as a job which scans and transmits, by e-mail, a manuscript.

The transmission job is to be executed by accumulating manuscript data read by a scanner function in a memory or an HDD of an apparatus, and registering data accumulated in the memory or the HDD in a job list.

In this scanner transmission, the above-described stopping control flow in FIG. 6 is modified as follows:
In other words, the scanner application 105 determines whether it is in a new scanner transmission job stop state immediately before starting transmission of a scanner transmission job (corresponding to step S301).

Here, if it is in a normal state (NO in step S301), the job processing continues (corresponding to step S303).

On the other hand, if it is in a new scanner transmission job stop state (corresponding to YES in step S301), transmission is brought into a stop state, postponing registering in the job list 102s of the scanner job for which reading has been completed as processing in the new scanner transmission job stop state to leave read manuscript data accumulated in the RAM 12 or the HDD 14 (corresponding to step S304).

### (3) timer job

A job which uses the printer application 104 includes an accumulating job which executes accumulating of printing data into a storage unit within the MFP 1 as well as a printing job which executes printing immediately. The accumulating job is a job which is automatically registered as a job to be processed in the job list 102, so that printing is executed with a timer which is activated at a specified time after printing data are accumulated in the storage unit of the RAM 12 or the HDD 14 of the apparatus first, and is a job which applies as a timer job.

This timer job also may become an unregistered job, so that it may be subjected to a job stopping control operation by postponing registering of this job. The RAM 12 or the HDD 14 of the MFP 1 that accumulates printing data in the timer job corresponds to the printer job receiving unit 104r in an exemplary printing job operation which executes the above-described instantaneous printing of the printer application 104.

In this timer job, the above-described stopping control flow in FIG. 6 is modified as follows.

In other words, the printer application 104 determines whether it is in a new printing job stop state when the time is up for the timer job (corresponding to step S301).

Here, if it is in a normal state (NO in step S301), printing processing which is started by registering a job in the job list 102s that is performed when the time is up for the timer job is performed as normally done (corresponding to step S303).

On the other hand, if it is in a new printing job stop state (corresponding to YES in step S301), printing data are left accumulated in the RAM 12 or the HDD 14, postponing registering in the job list 102s of the timer job that is performed when the time is up to leave printing data accumulated in the RAM 12 or the HDD 14 (corresponding to step S304). Thus, printing execution of the timer job is brought into the stop state.

### Addition of external controller

For the MFP 1 in FIG. 2 that has been explained as the Embodiments thus far, an exemplary configuration is shown in which job processing is performed exclusively by the controller 10 within the MFP 1 and processing functions are collected into a single MFP 1 unit.

A system configuration in which processing functions with the MFP 1 and an external machine having a processing function as system elements are distributed may be adopted for the MFP 1 and the external machine to mutually achieve enhanced functions and improved performance.

For example, an image processing system is configured which has added, as a system element, an external controller (an external machine) which functions as one application embedded in the MFP 1. When the added external controller can perform transmission and reception of data for which receiving processing is not possible in the MFP 1, it is made possible for the external controller to request processing of a printing job to the MFP 1 based on received data, so that a job stopping control function which is performed in response to a stop key operation may then be utilized in a manner similar to a printing job which is issued by one application embedded in the MFP 1.

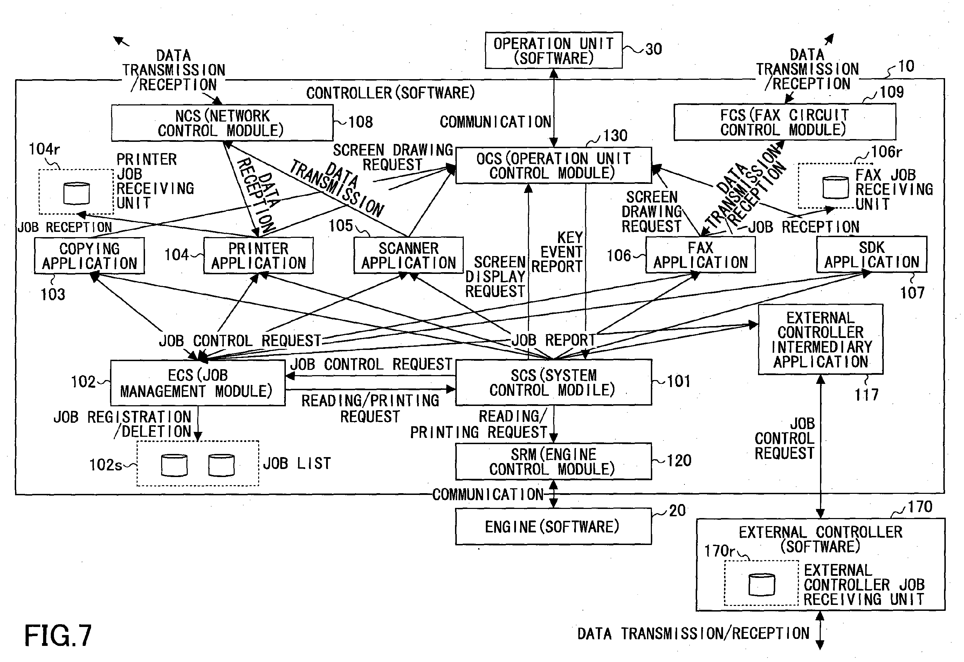

FIG. 7 is a diagram illustrating a software configuration of an image processing system in which an external controller is connected to the MFP 1 (FIG. 2).

In FIG. 7, what functions as an external controller 170, a PC (external machine), for example, which includes an external controller job receiving unit 170r, performs data exchange with the SCS 101 and the ECS 102 via an external controller intermediary application 117 which is provided on the MFP 1 side.

In other words, a system configuration of the ECS 102 and the SCS 101, and the external controller 170 is the same as a system configuration of the ECS 102 and the SCS 101 and the respective applications 103-107, embedded in the MFP 1, implementing a job stopping control function.

Therefore, in the image processing system in FIG. 7, the above-described stopping control flow in FIG. 6 for a processing request command (printing job) which is received by the external controller 170 is modified as follows.

In other words, when the external controller 170 completed receiving printing data, the external controller intermediary application 117 starts processing in accordance with the stopping control flow and first determines whether it is in a new printing job stop state (corresponding to step S301).

Here, if it is in a normal state (NO in step S301), the printing processing which is started by registering of a job in the job list 102s is performed as normal (corresponding to step S303).

On the other hand, if it is in a new printing job stop state (corresponding to YES in step S301), printing data are left accumulated in a storage unit of the external controller job receiving unit 170r, postponing registering of the printing job in the job list 102s as processing in the new printing job stop state (corresponding to step S304). Thus, printing execution of the timer job is brought into the stop state.

As described above, according to the Embodiment 1, when a command which causes processing to be stopped for an already accepted job, registering is postponed even for an unregistered job, so that a problem in which processing of a job for which stopping is applied is caused to start against the intention of the user is prevented and it is made possible to instantaneously stop processing by the stopping command, making it possible to speedily and accurately perform a procedure of stopping job processing.

Therefore, when a job to be stopped is a printing job, for example, it is possible to suppress wasteful paper outputting and eliminate disadvantages to the user by causing an output counter to be counted.

### Example 2

A job stopping control according to the present Example is a stopping control operation of "Operation 2", which is performed in response to pressing down of a stop key, wherein a control operation is performed which stops processing on all printing jobs, or jobs which cause the plotter 20p to be operated when the stop key is pressed down if a job which requests image processing is registered in the job list 102s.

This control operation is for avoiding a delay in operation due to stopping control performed in the related art, or stopping control which was performed in a manner restricted to a job being executed, or a job of an application displayed in a screen display unit of an operation unit when a stopping command is issued by pressing down of the stop key. In other words, in the related art stopping control, what can be stopped by pressing down the stop key is restricted to a job of an application being displayed as described above, so that problems arise such that an operation on a job of an application which is not displayed involves multiple steps when it is desired to quickly stop or cancel, causing a delay and such that an inappropriate operation is performed of disconnecting a main power supply due to an idea of wanting to avoid an operation which takes time. Thus, the above-described operation is an operation which is intended to prevent such problems.

In the present MFP 1, as shown in FIG. 2, an application which accepts a printing job includes respective applications of the copying application 103, the printer application 104, and the FAX application 106. Therefore, these applications are subjected to the above-described stopping control which is performed in response to pressing down the stop key, so that they may similarly be carried out in a mode such that stopping control is applied to an application to be subjected to.

However, in the present Example, an operation is performed to ensure that stopping control is not executed for a job which is determined as a job to be eliminated from a subject of stopping control.

The job to be eliminated from the subject of stopping control is a FAX job which utilizes the FAX application 106. A FAX machine is wide spread as an image processing apparatus which converts an image drawn on a paper manuscript to a FAX signal to transmit and receive the converted image via a communications unit and outputs an image by printing at the receiver, so that normally it is desired to instantaneously perform printing outputting at the time of receiving. Thus, stopping control is not applied for the FAX job, which is not to be subjected to the present stopping control.

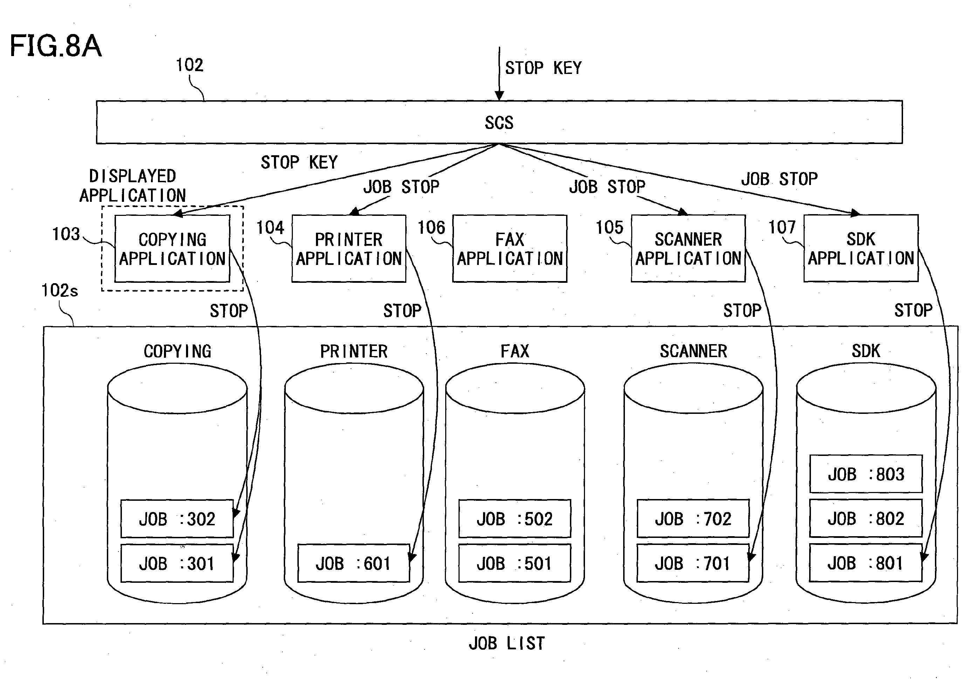

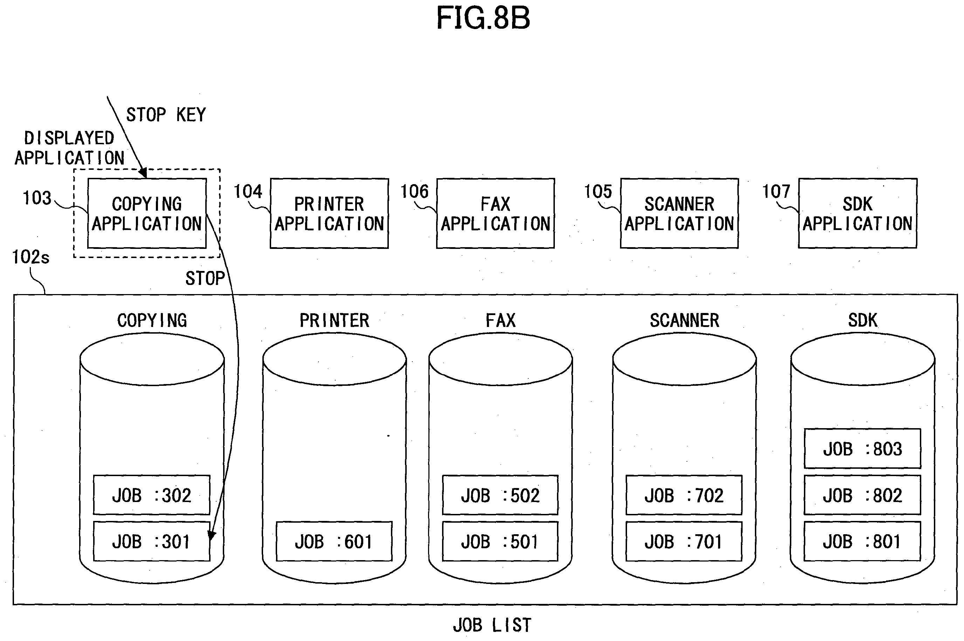

FIGS. 8A and 8B are diagrams for explaining an operation of the job stopping control system according to the present Example. FIG. 8A shows an operation of the present Example, while FIG. 8B shows a related-art operation. FIGS. 8A and 8B show, as parts related to the present stopping control operation, the job list 102s and the respective applications 103 to 107 for use in image processing, and the SCS 102 in FIG. 2, shown in the above as a software configuration of the MFP 1.

In the related art, as shown in FIG. 8B, the SCS which receives a report of a key event of pressing down of the stop key of the operation unit reports the stop key event only to an application which is performing job processing, or, in other words, a displayed application (the copying application 103 in the example shown in FIG. 8B), so that processing of the copying job 301 is stopped. However, if an intention of the user which pressed down the stop key is a processing stopping or canceling of the job 601 of the printer application 104, it is necessary to return from the copying screen displayed to a home screen and to transition to a screen which allows a key operation intended.

Thus, as shown in FIG, 8A, the SCS 102, which received a report of the key event of pressing down of the stop key of the operation unit, reports this key event to all applications (except the FAX application 105) which perform stopping control by the stop key event.

Applications which perform printing job processing which performs stopping control operation of the "Operation 2" are the copying application 103 and the printer application 104, so that, in these applications, processing of jobs (jobs 301 and 302 of the copying application; a job 601 of the printer application) which are registered in the respective applications in the job list 102 is stopped.

In this way, for the printing job, without restricting to a displayed application, processing of printing jobs in all applications may be stopped by pressing down the stop key of the operation unit. In the stop control operation of "Operation 2", processing of the scanner application 106 and the SK application 107 is not stopped.

As described above, for the application being displayed (executed), when stopping control of the "Operation 2" is performed, a process being executed stops, so that it is necessary to select whether an operation is continued, which is different from other applications.

Moreover, when an application other than an application which performs stopping control of the "Operation 2" is a displayed application, when pressing down of the stop key of the operation unit is performed, whether the key operation is accepted is set, so that stopping control in accordance with the setting is performed. This setting is determined from a viewpoint of causing executing, stopping, and canceling operations of a job to proceed efficiently.

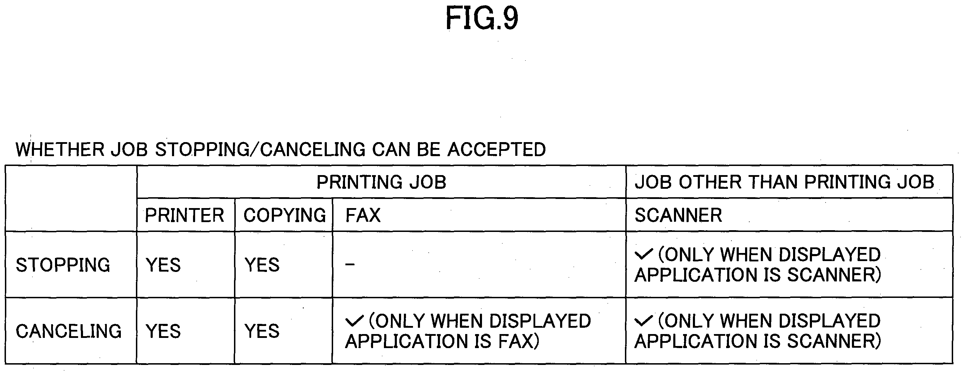

FIG. 9 is a table illustrating whether stop key and canceling operations can be accepted with respect to stopping control in correspondence with types of applications. In the table in FIG. 9 is shown whether the respective stop key and canceling operations can be accepted for a breakdown of respective applications of copying, printer, and FAX, which are applications for processing a printing job to be subjected to stopping control in the "Operation 2" and a scanner application, which is an application other than the above-described applications.

Here, as shown in the table in FIG. 9, copying and printer applications which are applications to process a printing job accept respective stop key and canceling operations, the FAX application only accepts the canceling operation with a condition that it only applies when a displayed application is the FAX application. On the other hand, the scanner application as an application other than a printing job accepts the respective stop key and canceling operations with a condition that it only applies when a displayed application is a scanner application.

An operation such as job stopping control, etc., in accordance with the table in FIG. 9 is explained in detail in the below-described Stopping control sequence.

### (Stopping control sequence)

When whether a key operation concerning stopping control can be accepted is determined according to stopping control as shown in the table in FIG. 9, different operations are yielded depending on a combination of whether a displayed application can accept a stop key operation, or whether a job being executed is a job of an application concerning a printing job, resulting in primarily the below-described operations of Stopping Control 1-4.
Stopping control 1: When a displayed application is executing a printing job for which a stopping request can be accepted;
Stopping control 2: When the displayed application is executing a job other than the printing job;
Stopping control 3: When the displayed application is executing the printing job for which the stopping request cannot be accepted; and
Stopping control 4: When an application other than the displayed application is executing the printing job for which the stopping request cannot be accepted.

Below, exemplary operations in "Stopping control 1" to "Stopping control 4" are specifically described.

### "Stopping control 1"

In the below-described exemplary operation, the copying application 103, which is a displayed application, is executing a copying job 301, which is a printing job for which a stopping request can be accepted. Moreover, this exemplifies a case such that the printer application 104 is executing a printing job 601 and the scanner application 105 is reading and accumulating.

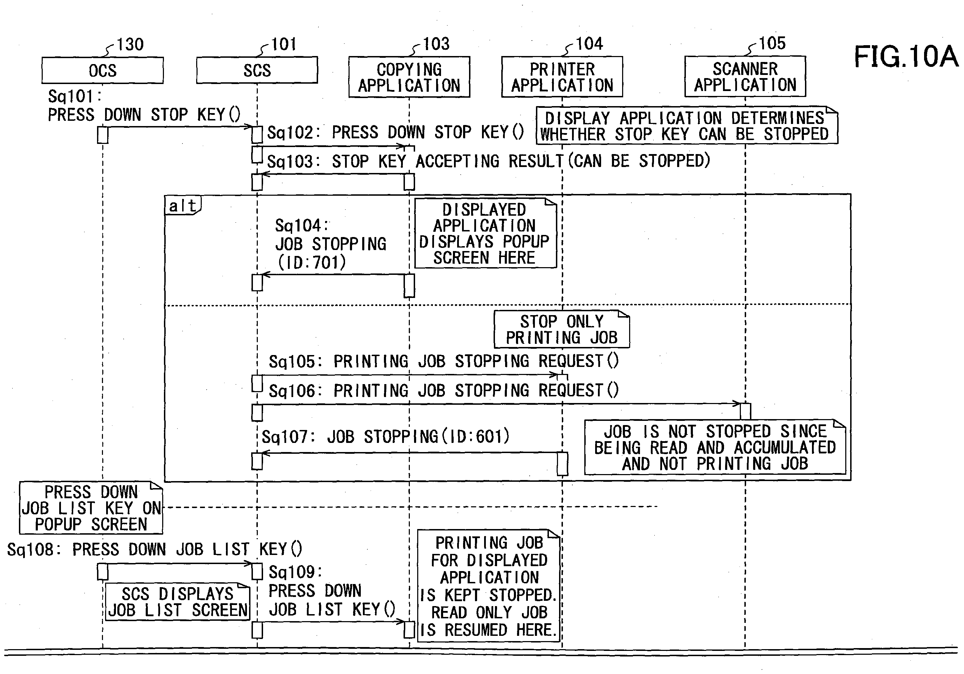

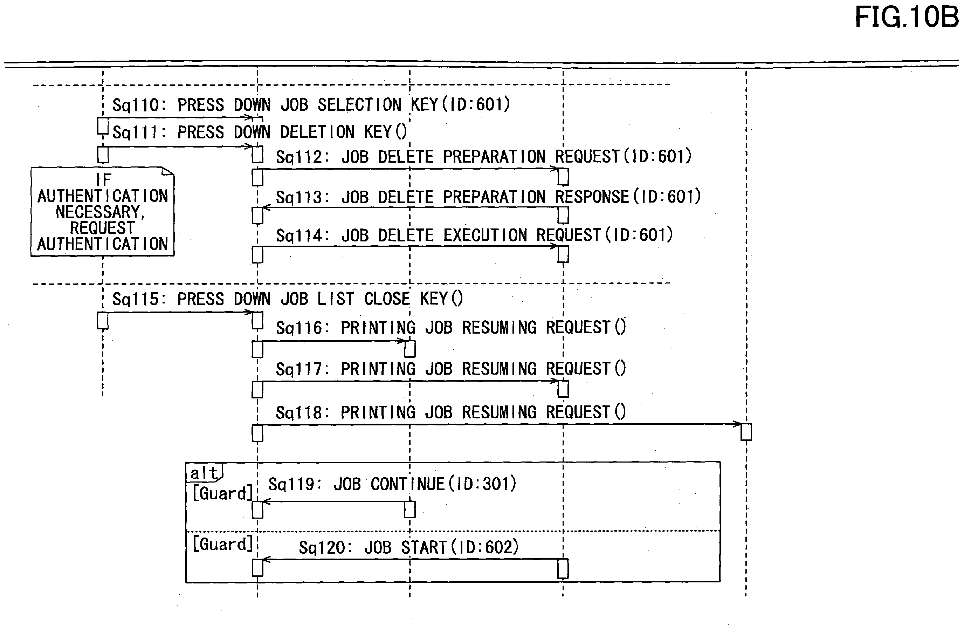

FIGS. 10A and 10B are sequence diagrams of the present exemplary operation in which a displayed application (copying) is executing a printing job for which a request for stopping can be accepted (a copying job);

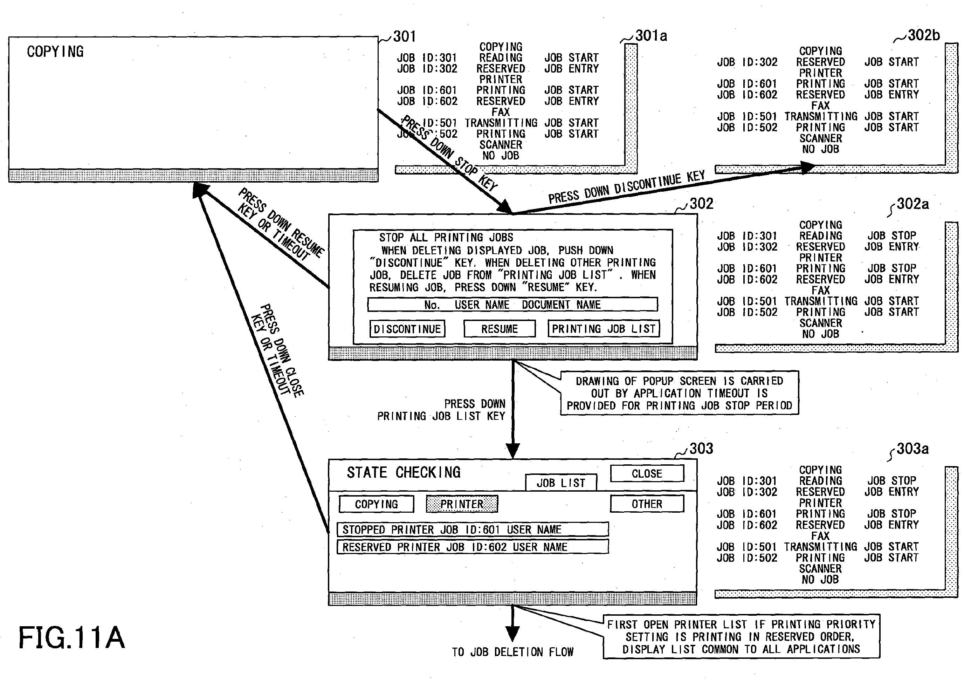

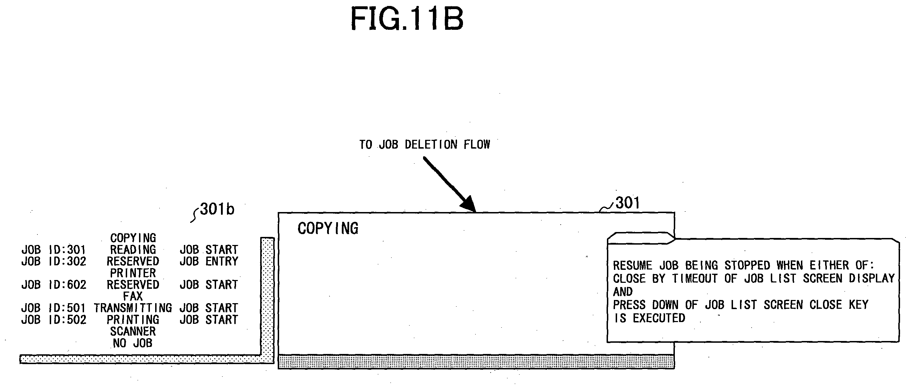

Moreover, FIGS. 11A and 11B are diagrams for explaining transitioning of a screen displayed in an operation unit 30 in the present exemplary operation.

According to a sequence in FIGS. 10A and 10B, the SCS 101, which received a report of a key event of pressing down of a stop key from the OCS 130 (Sequence Sq 101), sends this report to the copying application 103, which is the displayed application (Sequence Sq 102).

As processing on a stop key event which received the report, whether to accept the stop key is determined, and the determined result is reported to the SCS 101 (Sequence Sq 103). Whether to accept the stop key is determined in accordance with conditions set (Table in FIG. 9). Here, the determined result is that the stop key can be accepted.

Next, the copying application 103 instructs the operation unit 30 to cause a popup screen to be displayed. Here, the popup screen displayed is a screen 302 in FIGS. 11A and 11B. The displayed application is copying, so that a screen prior to pressing down of the stop key is a screen 301, which shows "Copying". A job state in each application then is shown in job information 301a, and a copying job shows that the job 301 is being executed.

In this popup screen 302, a display is made indicating that all printing jobs have been stopped, and "a discontinue" key for deleting a job being executed; "a resume" key for revoking stopping, and resuming; and "a printing job list" key for requesting displaying of a printing job list are provided.

Simultaneously with displaying of the popup screen 302, the copying application 103 reports to the SCS 101 that processing of the job 301 being executed is stopped (Sequence Sq 104).

Next, the SCS 101 makes a printing job stopping request to the printer application 104 (Sequence Sq 105), and also makes the same request to the scanner application 105 (Sequence Sq 106). The scanner application 105 does not perform processing of the printing job, so that the processing is not stopped.

The printer application 104 receives a printing job stopping request, stops printing job processing, and reports processing stopping of the printing job 601 to the SCS 101 (Sequence Sq 107).

A key operation in the popup screen 302, which is for the copying application 103 being executed that is a displayed application, may cause a job 301 being executed to be deleted by pressing down "the discontinue" key on the screen. (After deleting, job information 302a becomes 302b).

Pressing down of "the resume" key on the screen 302, returning before pressing down the stop key, causes it to return to the screen 301, which shows "copying". A timeout would also be a similar return operation.

Pressing down of "the printing job list" on the screen 302 causes the process to be directed to a sequence which displays an operation screen which makes it possible to cancel a job registered in the job list 102s.

In other words, the SCS 101, which receives a report of a key event from the OCS 130 by pressing down of "the printing job list" (Sequence Sq 108), instructs and causes the operating unit 30 to display the printing job list screen and simultaneously sends this report to the copying application 103 (Sequence Se 109), which is the displayed application.

The copying application 103, which received this report, continues to keep the stopped printing job in the stop state.

Moreover, the printing job list screen which is displayed then is a state checking screen 303 in FIGS. 11A and 11B.

Applications which process the printing job are copying and printer, so that jobs for these applications are displayed with job information (303a for job information at the time of stopping) . For the printer application of the state checking screen 303, the job state becomes such that the job 601 is stopped.

A key operation in the state checking screen 303, which is for a printing job for which the printer application 104 is registered, makes it possible to delete a job (a printing job 601 here) which is selected by pressing down for a selected job out of printing jobs on the screen (the job information 303a becomes 301b after deletion).

Pressing down of "close" key of the screen 303, returning before pressing down the stop key, causes it to return to the screen 301, which shows "copying". A timeout would be a similar return operation.

A job deletion in the printing job list screen (state checking screen) 303 is performed in accordance with the below-described sequence.

In other words, upon receiving, from the OCS 130, a report of a key event (Sequence Sq 110) by pressing down of a job selection key (here, a printing job 601 of the printer application 104 is selected) and a report of a key event (Sequence Sq 111) by pressing down of a delete key, the SCS 101 sends a job delete preparation request for deleting a job selected to the printer application 104 (Sequence Sq 112).

The printer application 104, which received this request, makes a preparation and returns a job delete preparation response to the SCS 101 (Sequence Sq 113).

Moreover, the SCS 101 which receives this response sends a job delete execution request which instructs a delete execution (Sequence Sq 114).

The above-described delete sequence is performed by a key operation of an operation screen (not shown) which transitions from the printing job list screen 303, and after deletion is executed, returning is performed before pressing down the stop key with a timeout or when the checking screen (not shown) is closed, returning to the screen 301, which shows "copying". FIGS. 11A and 11B exemplify job information 301b when a printing job 601 of the printer application 104 is deleted.

When this delete sequence is performed, it is possible to perform authentication which checks for a user himself which requested a job to be deleted. Existing methods are used for authenticating, such as requesting an entry of a password to a user.

Pressing down of "the close" key of the printing job list screen (state checking screen) causes the process to be directed to a sequence which resumes the printing job.

In other words, the SCS 101, which received a report of a key event from the OCS 130 by pressing down of "the close" key (Sequence Sq 115), sends a printing job resuming request to the copying application 103 (Sequence Sq 116), the printer application 104 (Sequence Sq 117), and the scanner application 105 (Sequence Sq 118) based on the report.

The copying application 103, which receives the printing job resuming request, resumes processing of the copying job 301 being stopped to report job continuity to the SCS 101 (Sequence Sq 119).

Moreover, the printer application 104 which receives a printing job resuming request starts processing of a printing job 602 that is planned to be processed following the deleted printing job to report the job start to the SCS 101 (Sequence Sq 120).

On the other hand, the scanner application 105 which receives a printing job resuming request does not perform processing of a job to be subjected to this stopping control and the processing is not stopped, so that this resuming request is ignored.

### "Stopping control 2"

The below-described exemplary operation is a scanner application 105 in which a displayed application executes a job other than a printing job and exemplifies a case in which the scanner application 105 is executing a read job.

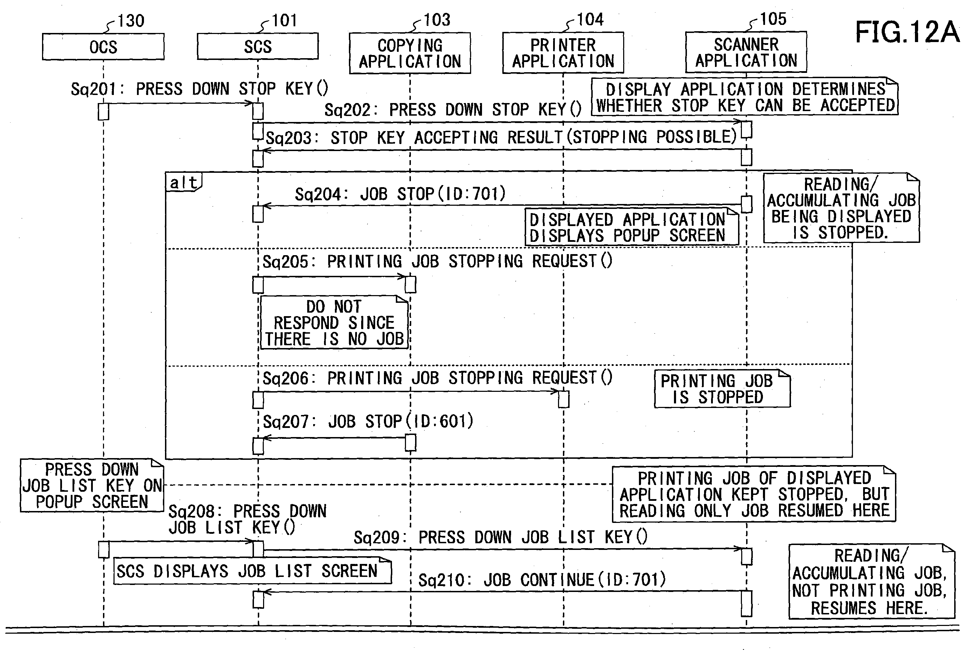

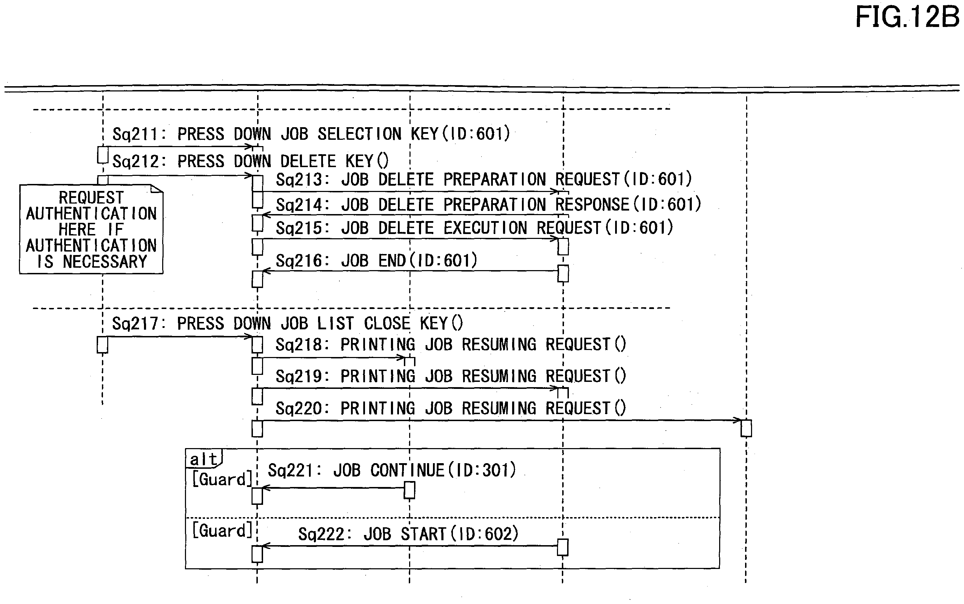

FIGS. 12A and 12B are sequence diagrams of the present exemplary operation in which a displayed application (scanner) is executing a job for which a stopping request can be accepted (a reading job).

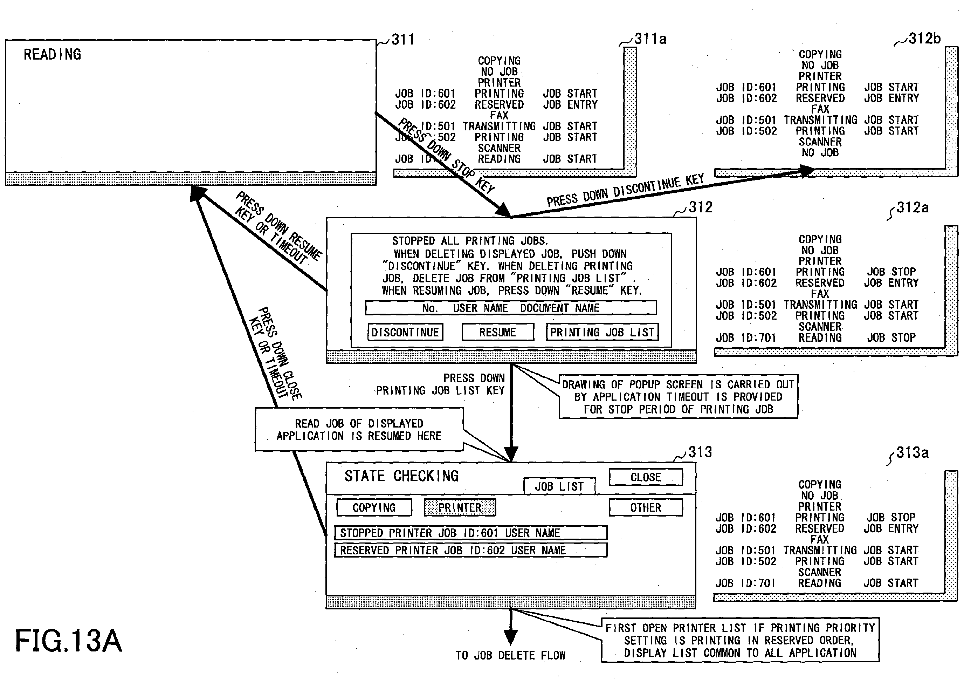

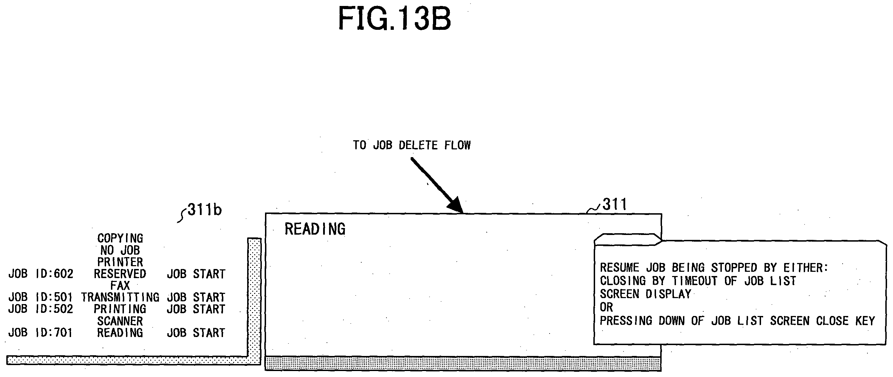

Moreover, FIGS. 13A and 13B are diagrams for explaining transitioning of a screen displayed in an operation unit 30 in the present exemplary operation.

According to a sequence in FIGS. 12A and 12B, the SCS 101, which receives a report of a key event of pressing down of a stop key from the OCS 130 (sequence Sq 201) sends this report to the scanner application 105, which is the displayed application (sequence Sq 202).

As processing for a stop key event for which the report was received, the scanner application 105 determines whether to accept the stop key, and reports the determined result to the SCS 101 (Sequence Sq 203) . Whether to accept the stop key is determined in accordance with conditions set (Table in FIG. 9). Here, the determined result is that the stop key can be accepted since a job for which a stop key can be accepted, other than a printing job is a reading job of the scanner application 105.

Next, the scanner application 105 instructs the operation unit 30 to cause a popup screen to be displayed. Here, the popup screen displayed is a screen 312 in FIGS. 13A and 13B. The displayed application is scanner, so that a screen prior to pressing down of the stop key is a screen 301, which shows "Reading". A job state in each application then is shown in job information 311a, and a scanner job shows that the job 701 is being executed (read).

In this popup screen 312, a display is made indicating that all printing jobs have been stopped and a reading job has been stopped, and "a discontinue" key for deleting a job being executed; "a resume" key for revoking stopping, and resuming; and "a printing job list" key for requesting displaying of a printing job list are provided.

Simultaneously with displaying of the popup screen 312, the scanner application 105 reports that processing of the job 701 is being executed to the SCS 101 (Sequence Sq 204).

Moreover, the SCS 101 makes a printing job stopping request to the copying application 103 (Sequence Sq 205), and also makes the same request to the printer application 104 (Sequence Sq 206). The copying application 103 has no job, so that no response is made.

The printer application 104 receives a printing job stopping request, stops printing job processing, and reports processing stopping of the printing job 601 to the SCS 101 (Sequence Sq 207).

A key operation in the popup screen 312, which is for the scanner application 105 being executed that is a displayed application, may cause a job 701 being executed to be deleted by pressing down of "the discontinue" key on the screen. (After deleting, job information 312a becomes 312b).

Pressing down of "the resume" key on the screen 312, returning before pressing down the stop key, causes it to return to the screen 311, which shows "reading". A timeout would be a similar return operation.

Pressing down of "the printing job list" on the screen 312 causes the process to be directed to a sequence which displays an operation screen which makes it possible to cancel a job registered in the job list 102s.

In other words, the SCS 101, which receives a report of a key event from the OCS 130 by pressing down of "the printing job list" (Sequence Sq 208), instructs and causes the operating unit 30 to display the printing job list screen and simultaneously sends this report to the scanner application 105, which is the displayed application (Sequence Sq 209). Here, in the copying application 103, the stopped printing job continues to maintain the stop state.

The printing job list screen displayed here is a state checking screen 313 in FIGS. 13A and 13B. Applications which process a printing job are copying and printer, so that a job for these applications is displayed with job information (313a for the job information when being stopped). The job state in the printer application of the state checking screen 313 is that the job 601 is being stopped.

An operation in subsequent sequences which are performed by a key operation in the printing job list screen (state checking screen) 313, or in other words, sequences Sq 211-Sq 222 is similar to an operation in sequences Sq 110-Sq 120 in a sequence diagram in FIGS. 10A and 10B in the above-described "stop control 1". Therefore, here the previous explanation is to be referred to, so that a description thereof is omitted.

### "Stopping control 3"

An exemplary example shown below is an example in a case in which the FAX application 106, which is a displayed application, is executing a FAX job, which is a printing job for which a stopping request cannot be accepted.

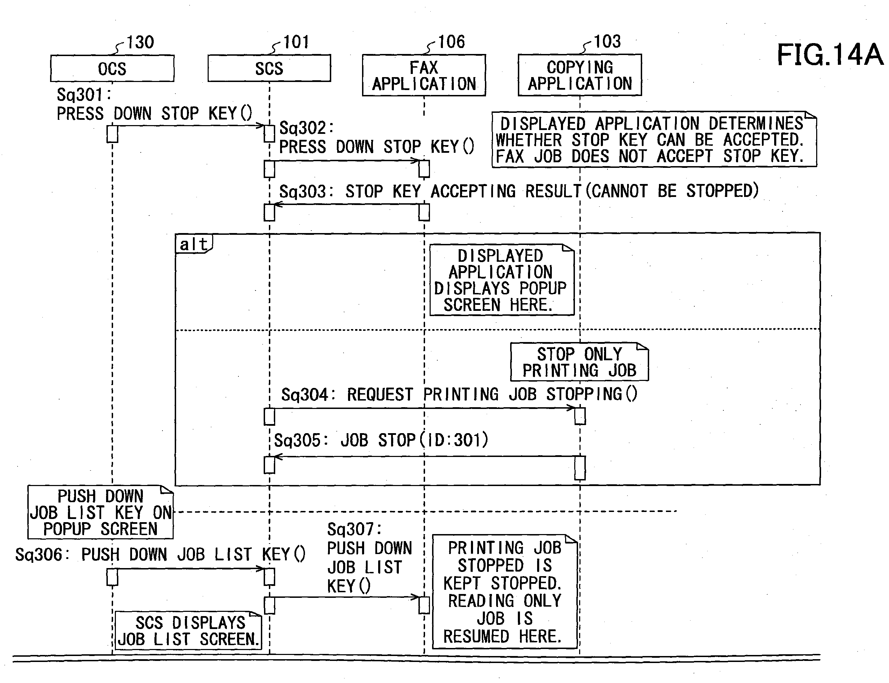

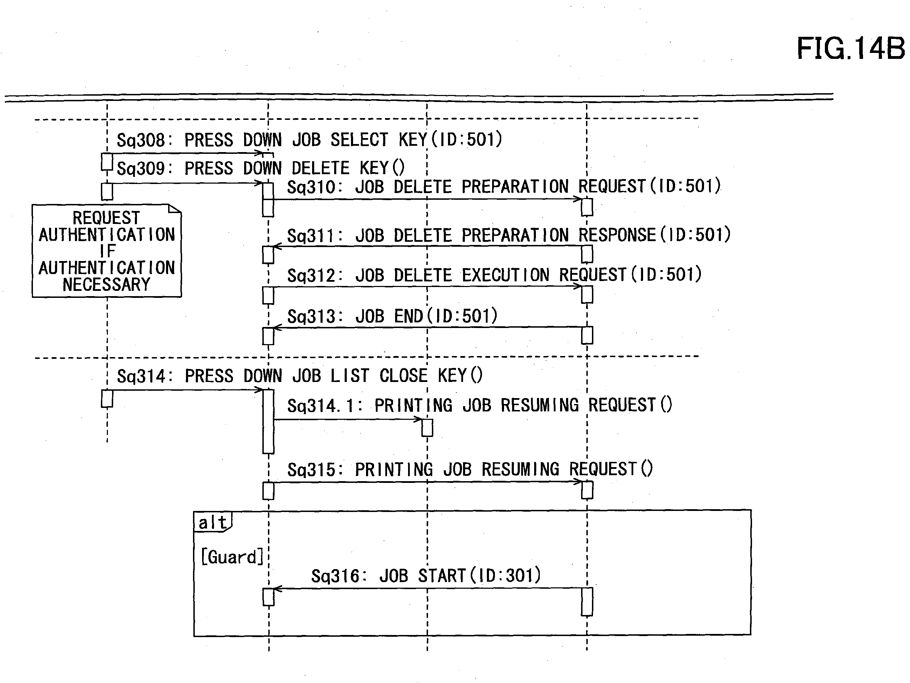

FIGS. 14A and 14B are sequence diagrams of the present exemplary operation in which a displayed application (FAX) is executing a job for which a stopping request cannot be accepted (a printing job)

According to a sequence in FIGS. 14A and 14B, the SCS 101, which receives a report on a key event of pressing down of a stop key from the OCS 130 (Sequence Sq 301) sends this report to the FAX application 106 of a displayed application (Sequence Sq 302).

As processing for a stop key event for which a report is received, the FAX application 106 determines whether the stop key can be accepted and reports the determined results to the SCS 101 (Sequence Sq 303). Whether to accept the stop key is determined in accordance with conditions set (Table in FIG. 9). In principle, the printing job allows accepting of the stop key. However, the FAX job is removed from the principle, so that the determined result is that the stop key cannot be accepted.

Next, the FAX application 106 instructs and causes the operation unit 30 to display the popup screen. On the popup screen displayed then are provided "a discontinue" key for deleting a job being executed and a fact that all printing jobs are being stopped; "a resume" key for revoking stopping and resuming: and "a printing job list" key for requesting displaying of a printing job listing.

Moreover, the SCS 101 which received that a stop key cannot be accepted from the FAX application 106 makes a printing job stopping request to the copying application 103 which is executing a job (Sequence Sq 304) .

The copying application 103 receives the printing job stopping request, stops processing the printing job and reports the processing stopping of the printing job 301 to the SCS 101 (Sequence Sq 305).

For the FAX application 106, which is a displayed application, a key operation in the popup screen may cause a job 501 being executed to be deleted by pressing down of the delete key in the printing job list screen.

By pressing down of "the printing job list" key, the delete procedure causes the process to be directed to a sequence which displays an operation screen on which canceling of a job registered in the job list 102s is possible.

In other words, the SCS 101, which receives a report of a key event by pressing down of "the printing job list" key from the OCS 130 instructs and causes the operation unit 30 to display the printing job list screen and at the same time sends this report to the FAX application 106 of a displayed application (Sequence Sq 307). Here, in the copying application 103, the printing job which was caused to stop is continued to be maintained in the stop state.

On the printing job list screen which is displayed here, a job for these applications, which are copying and FAX applications which process the printing job, is displayed with job information.

A job in the printing job list screen is deleted in accordance with the following sequence.

In other words, upon receiving a report of a key event (Sequence Sq 308) by pressing down of a job selection key (here selecting a job 501 of the FAX application 106) and receiving a report of a key event (Sequence Sq 309) by pressing down of a delete key, sends a job delete preparation request for deleting a job selected to the FAX application 106 (Sequence Sq 310).

The FAX application 106, which received this request, make the preparation and returns a job delete preparation response to the SCS 101 (Sequence Sq 311).

Moreover, the SCS 101, which received this response, sends the FAX application 106 of the job delete execution request which instructs the delete execution (Sequence Sq 312).

Furthermore, the FAX application 106, which received this request, executes the job deletion and reports the job deletion to the SCS 101 (Sequence Sq 313) .

The delete sequence is performed by a key operation of an operation screen (not shown) which transitions from the printing job list screen, and, after the deletion is executed, the process returns to a FAX screen, which is a displayed application before pressing down of the stop key, by closing a checking screen (not shown) or by a timeout.

When this delete sequence is performed, it is possible to perform authentication which checks for a user himself who requested a job which is seeking to delete. For the authentication, existing schemes are used such as requesting the user to enter a password, etc.

Pressing down of "a close" key, which is provided on the printing job list screen, causes the process to be directed to a sequence which resumes the printing job.

In other words, the SCS 101, which received a report of a key event by pressing down of "the close" key from the OCS 130 (Sequence Sq 315), sends a printing job resume request to the copying application 103 based on this report (Sequence Sq 314).

The copying application 103, which received the printing job resume request, resumes processing of the copying job 301, which was stopped, to report the job start to the SCS 101 (Sequence Sq 316).

Then the printing job resume request is also sent to the FAX application 106 (Sequence Sq 314.1), which is ignored.

### "Stopping control 4"

An exemplary operation shown below is an example in a case in which the FAX application 106, an application other than the copying application 103 which is a displayed application, is executing a FAX job, which is a printing job for which a stopping request cannot be accepted.

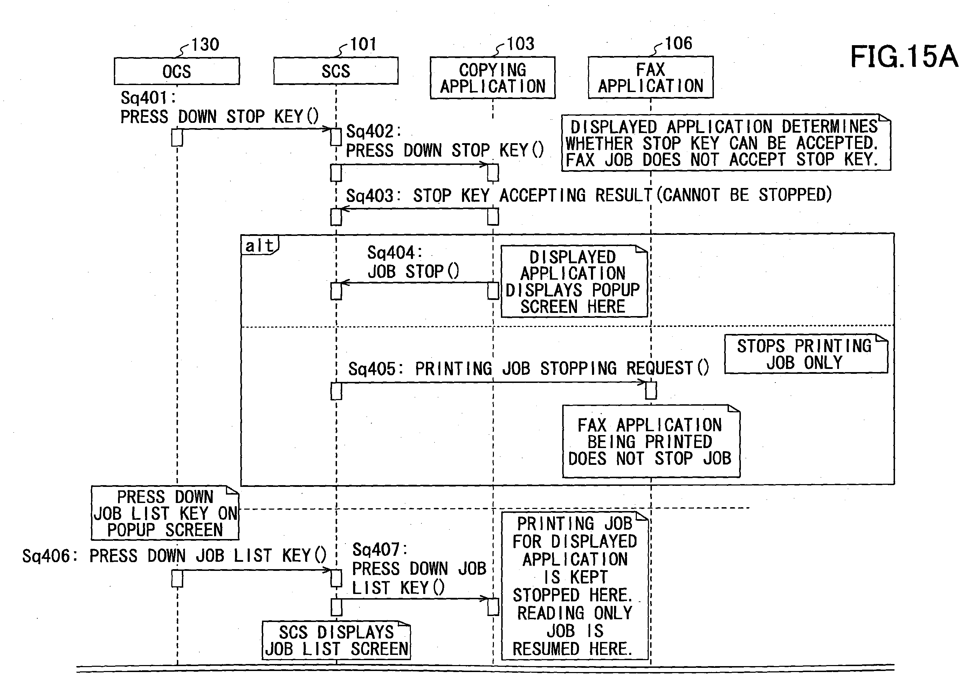

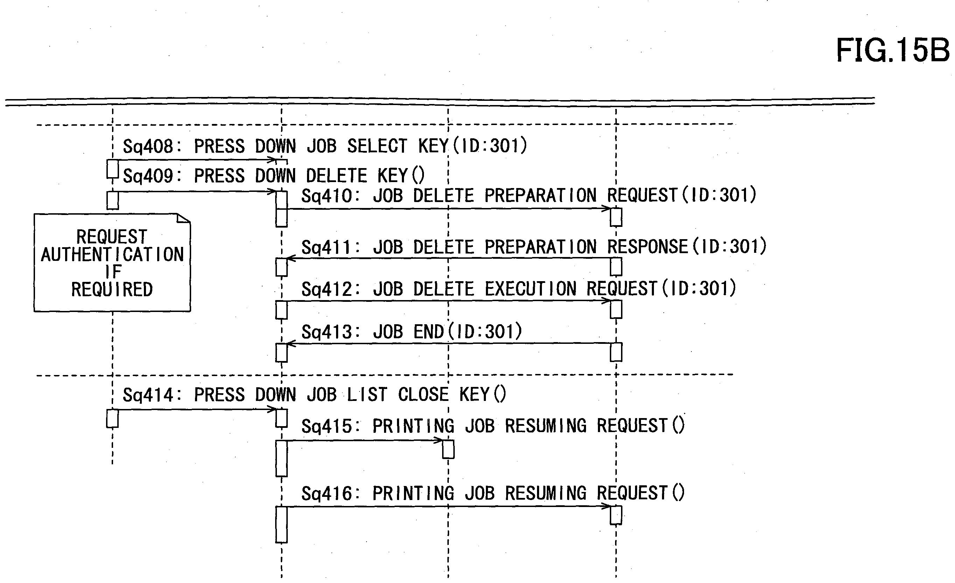

FIGS. 15A and 15B are sequence diagrams of the present exemplary operation in which the FAX application 106, an application other than the copying application which is a displayed application, is executing a job for which a stopping request cannot be accepted (a printing job).

According to a sequence in FIGS. 15A and 15B, the SCS 101, which receives a report of a key event of pressing down of a stop key from the OCS 130 (Sequence Sq 401), sends this report to the copying application 103, which is a displayed application (Sequence Sq 402).

As processing for a stop key event for which a report is received, the copying application 103 determines whether the stop key can be accepted and reports the determined result to the SCS 101 (Sequence Sq 403). Whether to accept the stop key is determined in accordance with conditions set (Table in FIG. 9). Here the determined result is that the stop key cannot be accepted.

Next, the copying application 103 stops the job to report the job stopping to the SCS 101 (Sequence Sq 404) . Moreover, at this timing, the copying application 103 instructs and causes the operation unit 30 to display the popup screen. On the popup screen displayed then are provided "a discontinue" key for deleting a job being executed and a fact that all printing jobs except the FAX job are being stopped; "a resume" key for revoking stopping, and resuming; and "a printing job list" key for requesting displaying of a printing job list.

Moreover, the SCS 101, which received from the copying application 103 that a stop key from can be accepted makes a printing job stopping request to the FAX application 106 which is executing printing (Sequence Sq 405).

The FAX application 106, which received this request, does not accept the processing stopping request, so that it ignores the request to continue processing the printing job.

A key operation in the popup screen is for the copying application 103, which is a displayed application, and, for a job being executed, the job may be deleted by pressing down of "the discontinue" key, while, for a job which is not yet executed (a job 301 here), the procedure would be to delete the job by pressing down of "the print job list" key.

Pressing down of "the printing job list" key causes the process to be directed to a sequence which displays an operation screen on which canceling of a job registered in the job list 102s is possible.

In other words, the SCS 101, which received a report of a key event by pressing down of "the printing job list" key from the OCS 130 (Sequence Sq 406) instructs and causes the operation unit 30 to display the printing job list screen and at the same time sends this report to the copying application 103, which is a displayed application (Sequence Sq 407). Here, in the copying application 103, any printing job which was caused to stop is continued to be maintained in the stop state.

On the printing job list screen which is displayed here, a job for these applications, which are copying and FAX applications which process the printing job, is displayed with job information.

A job in the printing job list screen is deleted in accordance with the following sequence.

In other words, upon receiving a report of a key event (Sequence Sq 408) by pressing down of a job selection key (here selecting a job 301 of the FAX application 103) and receiving a report of a key event by pressing down of a delete key (Sequence Sq 409) from the OCS 130, sends a job delete preparation request for deleting a job selected to the FAX application 103 (Sequence Sq 410).

The copying application 103, which received this request, make the preparation and returns a job delete preparation response to the SCS 101 (Sequence Sq 411).

Moreover, the SCS 101, which received this response, sends the copying 103 the job delete execution request which instructs the delete execution (Sequence Sq 412).

Furthermore, the copying application 103, which received this request, execute the job deletion and reports the job deletion as a job end to the SCS 101 (Sequence Sq 413).

The above-described delete sequence is performed by a key operation of an operation screen (not shown) which transitions from the printing job list screen, and, after the deletion is executed, the process returns to a copying screen, which is a displayed application before pressing down of the stop key, by closing a checking screen (not shown) or by a timeout.

When this delete sequence is performed, it is possible to perform authentication which checks for a user himself who requested a job which is seeking to delete. For the authentication, existing schemes are used such as requesting the user to enter a password, etc.

Pressing down of "a close" key, which is provided on the printing job list screen, causes the process to be directed to a sequence which resumes the printing job.

In other words, the SCS 101, which received a report of a key event by pressing down of "the close" key from the OCS 130 (Sequence Sq 414), sends a printing job resume request to the copying application 103 based on this report (Sequence Sq 415).

The copying application 103, which received the printing job resume request, resumes processing of the copying job, which was stopped.

Moreover, the SCS 101 send the printing job resume request also to the FAX application 106 (Sequence Sq 416). The FAX job is to be subjected to stopping control by the stop key, so that resuming is unlikely.

### "Operations other than Stopping Control 1-4"

Operations with respect to stopping control performed by pressing down of the stop key, other than "Stopping Control 1-4" are explained in (Exemplary Operation 5)-(Exemplary operation 8) below.

### (Exemplary Operation 5)

The operation concerning the stopping control is an example for a case in which the copying application 130, which is a displayed application, is not executing a job.

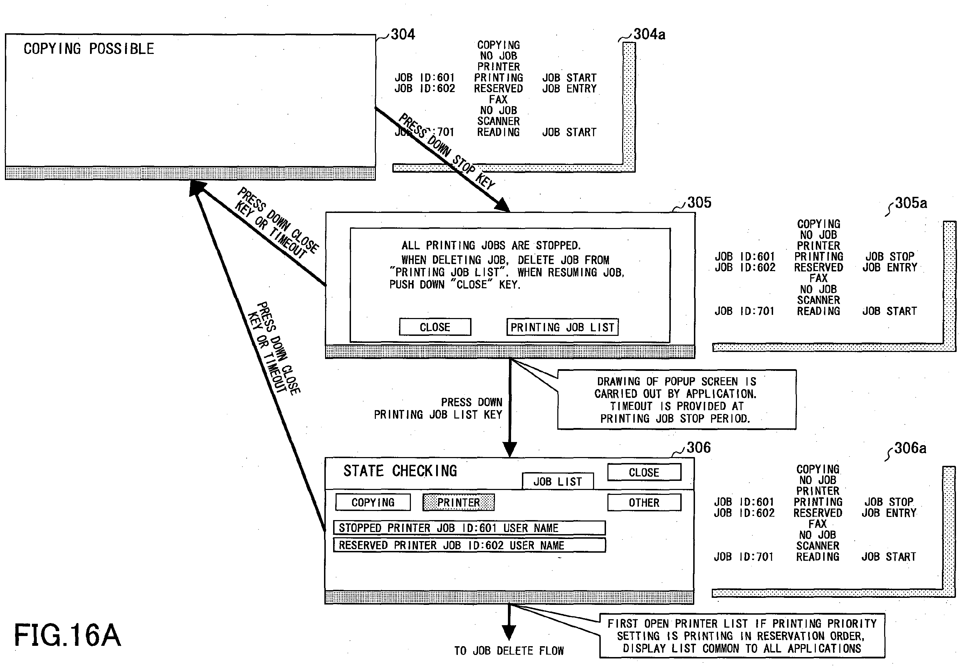

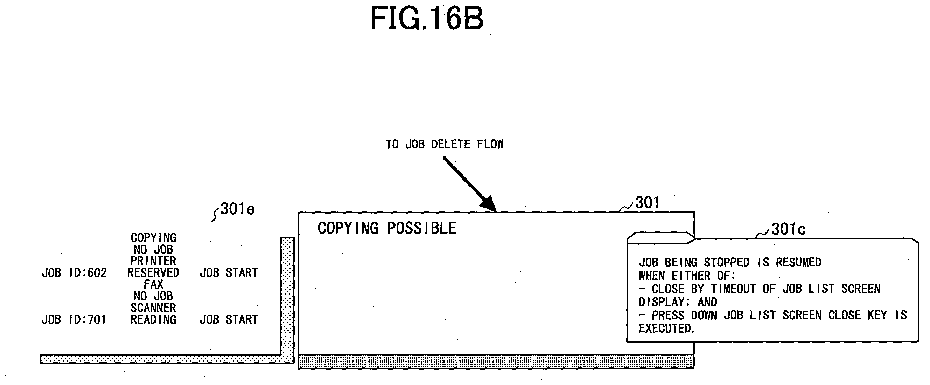

FIGS. 16A and 16B are diagrams for explaining transitioning of a screen displayed in an operation unit 30 in the present exemplary operation.

In FIGS. 16A and 16B, a screen before pressing down of the stop key of a displayed application when a job is not being executed is a screen 304 which indicates that "copying is possible". A job state in the respective applications then is indicated in the job information 304a, so the fact that there is no job is indicated in the copying job.

In this state, when the stop key is pressed down, processing of a job 601 which is being executed by a printing job of the printer application 104 which is subjected to stopping control is stopped.

Then, in the screen 305 which is popped up after transitioning that indicates the job state is made a display which shows that all printing jobs are stopped and is provided "a printing job list" key for requesting displaying of a printing job list and "a close key" for revoking stopping, and resuming.

In the screen 305 is not provided "a discontinue" key for deleting a job being executed. This is based on a judgment that, when there is no job being executed in the copying application 103, which is a displayed application, there is not much need for increasing a degree of urgency such as to discontinue (involving deletion), so that performance is better by deleting from the printing job list and dealing with one system.

Pressing down of "the close" key which is provided in the popup screen 305 causes the process to return to a state before the stopping key is pressed down, or in other words, to resume a stopped process to return to the screen 304 which indicates that "copying is possible". A timeout would be a similar returning operation.

Moreover, at a time of pressing down "the printing job list" key, it is possible to perform a procedure which deletes a job selected from an uncompleted printing job. This job deleting procedure does not differ from a procedure of deleting a job by an operation on the printing job list (state checking) screen 303 that was described in the above with reference to FIGS. 11A and 11B. Thus, the explanation thereof is omitted here.

### (Exemplary Operation 6)

The operation concerning the stopping control is an example for a case in which a home screen is displayed in the operation unit 30. The home screen is a so-called menu screen in which an application to be used is selected from a list of available applications, or a specific application screen when waiting in an idle state.

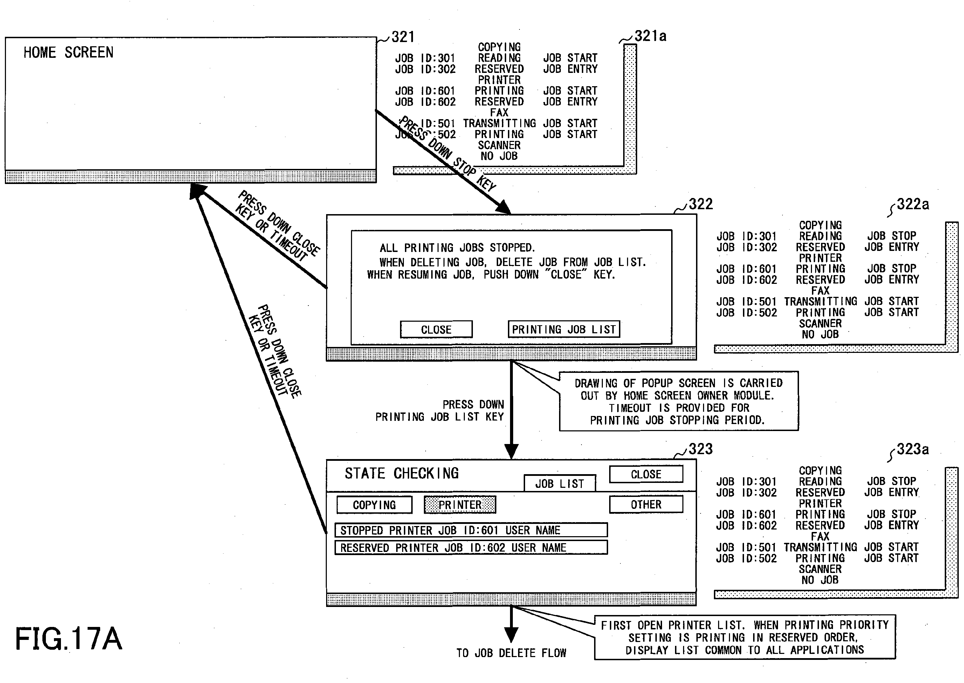

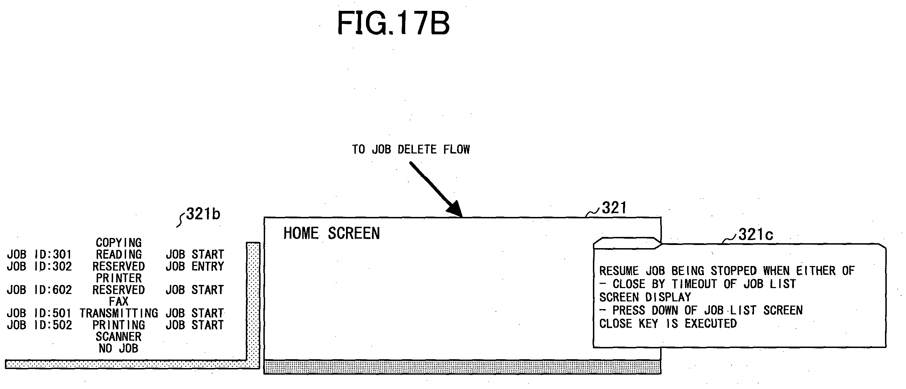

FIGS. 17A and 17B are diagrams for explaining transitioning of a screen displayed in an operation unit 30 in the present exemplary operation.

In FIGS. 17A and 17B, a home screen before pressing down of the stop key of the displayed application is a screen 321. A job state in each application here is indicated in the job information 321a, a job of respective applications of copying, printer, and FAX that are other than the scanner application 105 is registered, and the registered job concerns a printing job.

In this state, when the stop key is pressed down, processing of a job which is being executed by a printing job of the printer application 104 and the copying application 103 which are subjected to stopping control is stopped.

Then, in the screen 322 which is popped up after transitioning that indicates the job state is made a display which shows that all printing jobs are stopped and is provided "a printing job list" key for requesting displaying of a printing job list and "a close key" for revoking stopping, and resuming.

In the screen 322 is not provided "a discontinue" key for deleting a job being executed. This is based on a judgment that, when the displayed application is the copying application 103, there is not much need for increasing a degree of urgency such as to discontinue (involving deletion), so that performance is better by deleting from the printing job list and dealing with one system.

Pressing down of "the close" key which is provided in the popup screen 322 causes the process to return to a state before the stopping key is pressed down, or in other words, to resume a stopped process to return to the home screen 321. A timeout would be a similar returning operation.

Moreover, at a time of pressing down "the printing job list" key, it is possible to perform a procedure which deletes a job selected from an uncompleted printing job. This job deleting procedure does not differ from a procedure of deleting a job by an operation on the printing job list (state checking) screen 303 that was described in the above with reference to FIGS. 11A and 11B. Thus, the explanation thereof is omitted here.

### (Exemplary Operation 7)

The operation concerning the stopping control is an example for a case in which a home screen is displayed in the operation unit 30.

The home screen is a so-called menu screen in which an application to be used is selected from a list of available applications, or a specific application screen when waiting in an idle state.

A difference with the above-described exemplary operation 6, which shows a case in which a home screen is displayed is that, in the present exemplary operation, it is an operation in a state of waiting for a job in an idle state.

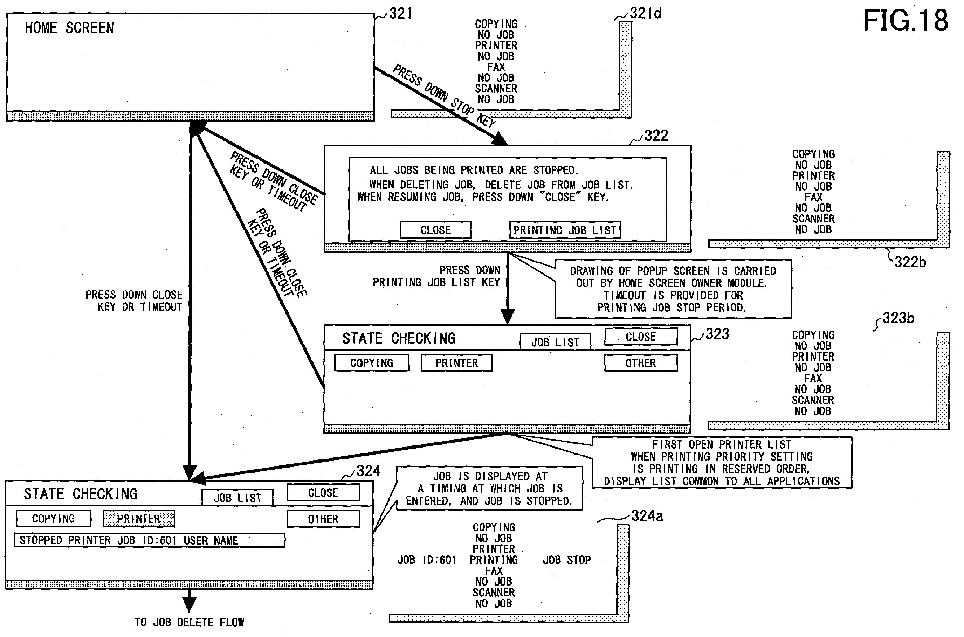

FIG. 18 is a diagram for explaining transitioning of a screen displayed in an operation unit 30 in the present exemplary operation.

In FIG. 18, a home screen before pressing down of the stop key of the displayed application is a screen 321. As shown in the job information 321d, the job in the respective applications then is in a state in which the job is not registered for any of the applications.

In this job state, when a stop key is pressed down, in the screen 322 which is popped up in a manner similar to the above-described exemplary operation 6 is made a display which shows that all printing jobs are stopped and is provided "a printing job list" key for requesting displaying of a printing job list and "a close key" for revoking stopping, and resuming.

It is envisaged that this pressing down of the stop key in the job state is performed by a user with an intention to cancel a job requested before starting processing after already requesting a printing job which uses the printer application 104, for example.

Then, in order to respond with an operation which is aligned with the intention, here, a job which is requested in the above-described envisaged condition is displayed in a state checking screen 324 of the present exemplary operation to result in a job to be deleted.

In order to do so, it is arranged to make it possible for a state checking screen which is displayed by pressing down of "the printing job list" key to be displayed in a screen as a job to be stopped and deleted in instantaneous response to registering (job entry) of the job, and also to take setting time of a timeout longer than normal in an idle time.

Taking such a measure makes it possible to cancel a job in alignment with the intention of the user.

### (Exemplary Operation 8)

The operation concerning the stopping control is an example in a case in which a displayed application in a screen in the operation unit 30 is an SDK application, an MFP browser.

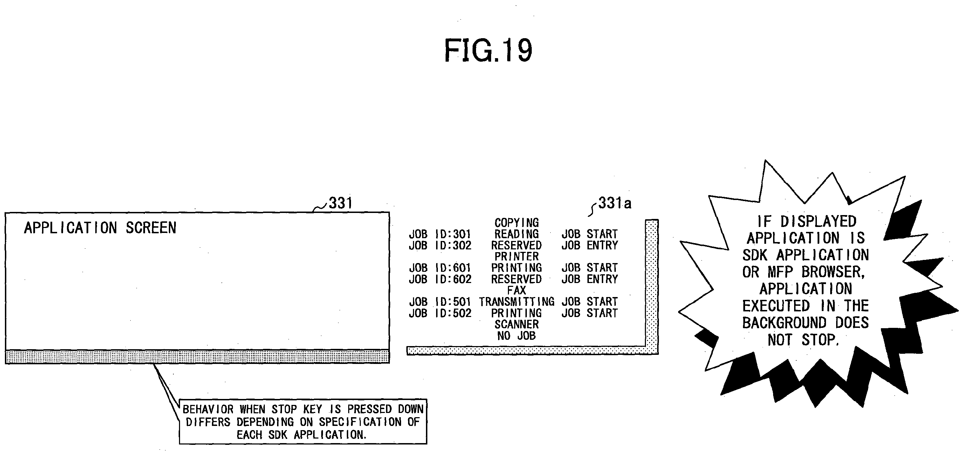

FIG. 19 is a diagram for explaining an operation in a case in which a displayed application is an SDK application and an MFP browser.

In FIG. 19, a screen 331 which allows an operation on the SDK application is displayed. Then, as shown in the job state 331a therein, a job is registered for an application such as copying, printer, etc., that accepts stopping control by an operation of the stop key, so that the process is in an operation state in which applying stopping is possible.

However, even if the registered job is in such an operation state, when the displayed application is an SDK application (the same for MFP browser), it is ensured that stopping control which is in response to an operation of the stop key is not performed.

The reason for this operation is to avoid an occurrence of an error operation in stopping control, and an occurrence of problems in an input operation of a job and processing of a job of the MFP browser since a specification in the SDK application and the MFP browser is different from a specification in an application other than the above-described SDK application and the MFP browser, so that there is a possibility that an operation which is intended by pressing down the stop key is not obtained.

### "Job deletion procedure in printing job list"

In the above-describe exemplary operation of a job stopping control started by pressing down the stop key, a deletion operation is accepted via a screen which transitions by pressing down of "the printing job list" of a screen which is displayed as a popup in a screen of the operation unit 30 at a timing in which processing of a printing job is stopped (FIGS. 11, 13, and 16-18).

Here, a procedure of this deletion operation is further described in detail.

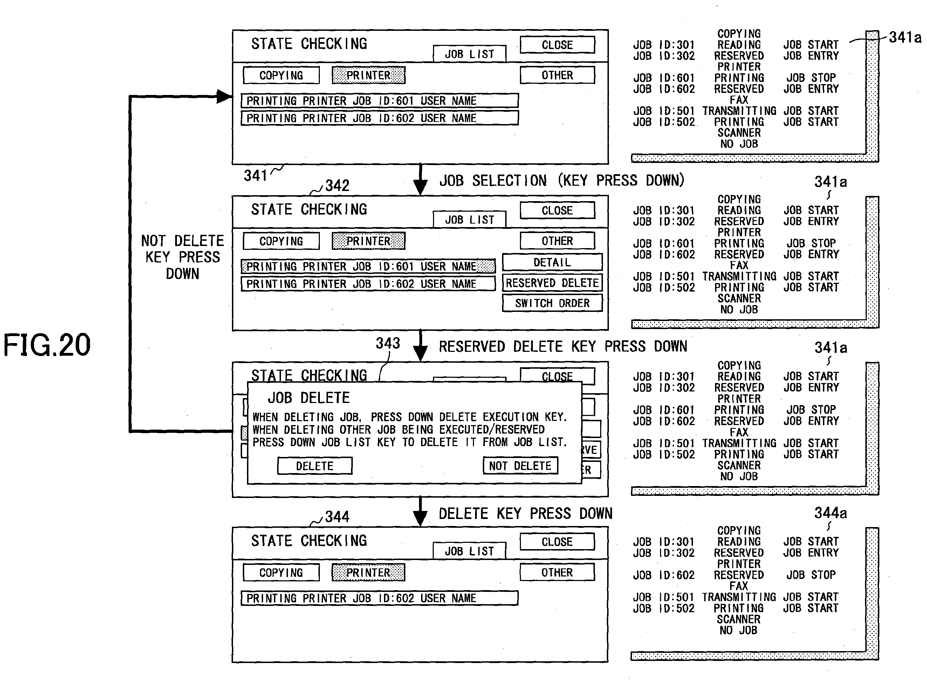

FIG. 20 is a diagram for explaining a transition of a display screen by a job deletion operation on a printing job list screen.

With "a print job list" key being provided in a screen which is displayed with a message that processing of a printing job is stopped in response to pressing down of the stop key, a printing job list screen which is opened by an operation on this key is a state checking screen 341 in FIG. 20.

A method may be adopted for the printing job list (state checking) screen of placing all jobs to be deleted in the respective applications indicated in the job state 341a then in the order of request of processing. However, a method is adopted of displaying in such a manner that a key is provided for each application (or in the screen 341 shown, a key is provided for the respective applications of "copying" and "printer" and a key is provided for "a different" application (including FAX and scanner which can be deleted depending on conditions) to make it possible to easily select a job in order to speedily perform an operation as a job to be deleted is specified at the time of pressing down of the stop key.

In the screen 342 which transitions when a printer key is selected, each job to be deleted from what is shown in the job state 341a then is displayed with job information and a "reserved delete" key is provided.

A job to be deleted is a job to be cancelled that is shown in the Table in FIG. 9 in advance, and processing including a job which is being executed or a job for which processing is stopped, and a job being reserved is to be an uncompleted job.

In the screen 342, when a job to be selected is instructed to press down "a reserved delete" key, "a job delete" screen 343 provided with respective keys of "delete" and "not delete" is popped up.

"The job delete" screen 343 pops up and transitions to a state checking screen 344 when "the delete" key is pressed down. As shown in the job state 344a after this delete operation is performed, a job for which a delete operation is performed (a job 601 which is being printed here) has been cancelled, so that, in "the job delete" screen 343, only a job 602 in the next order is listed as being printed or reserved. Thus, canceling may be checked with this screen.

On the other hand, "the job delete" screen 343, which is popped up, transitions to an original state checking screen 341 when "the not delete" key is pressed down therein. After this operation is performed, it is selected whether "a close" key is pressed down to end an operation, or a job to be deleted is further searched, switching an application.

### "Addition of unregistered printing job stopping control"

In the present Example which performs stopping control in the above-described "Operation 2", an unregistered printing job to be subjected in stopping control in the above-described "Operation 1" is not subjected to control. However, the Operations 1 and 2 have in common that they are job stopping control by pressing down the stop key, so that a software configuration which implements functions executed by combining these control operations may be carried out by adopting them in an application to be applied to.

A function which is added to job stopping control of the present Example is a function which performs a control operation in which a new printing job stop is effected and registering of a printing job in the job list 102s is postponed, which function was described with reference to FIG. 3 in the above-described "Embodiment 1".

In this way, a function of postponing registering of an unregistered printing job is added to eliminate a problem that an unregistered one is caused to be started, making it possible to ensure that execution of all printing jobs which are to be subjected to stopping control is stopped.

### DESCRIPTION OF THE REFERENCE NUMERALS

- 1: MFP
- 10: Controller
- 11: CPU
- 12: RAM
- 13: ROM
- 14: HDD
- 16: Network I/F
- 20: Engine unit
- 20s: Scanner
- 20p: Plotter
- 30: Operation unit
- 30d: Screen display unit
- 30k: Key input unit
- 50: External machine (PC)
- 60: External FAX machine
- 101: SCS
- 102: ECS
- 102s: Job list
- 103: Copying application
- 104: Printer application
- 105: Scanner application
- 106: FAX application
- 108: NCS
- 130: OCS
- 170: External controller

### RELATED ART DOCUMENT

Patent document 1: JP2000-76083A

## Claims

1. A job processing system (10), comprising:
a job accepting unit (130, 101) configured to accept a job;
a job registering unit (102) configured to register the job accepted by the job accepting unit;
a job processing unit (120) configured to perform processing of the job registered in the job registering unit;
a stopping command accepting unit (101) configured to accept a processing stopping command for the job processing unit (120); and
a control unit (102) configured to perform control in which registering of jobs is postponed for jobs which are still in the process of being registered in the job registering unit and have not yet been so registered when the stopping command accepting unit accepted the processing stopping command, and to cause stopping of processing of registered jobs.

2. A job processing system as claimed in claim 1, wherein
the job processing unit (120) is configured to perform processing for multiple types of job; and
the control unit is configured to postpone registration only of jobs of a predetermined one of the multiple types of job.

3. A job processing system as claimed in claim 1 or claim 2,
comprising control means configured to cause processing of a job registered in the job registering unit to be stopped only when the stopping command accepting unit has accepted the processing stopping command.

4. A job processing system as claimed in any one of claims 1 to 3, comprising a job receiving unit (104r) configured to store jobs accepted by the job accepting unit (101), wherein the control unit is configured to hold apostponed job in the job receiving unit.

5. A program for causing a computer to function as respective units of the job accepting unit; the job registering unit; the job processing unit; the stopping command accepting unit; and the control unit in a job processing system as claimed in any one of claims 1 to 4.

6. A method of job processing in a job processing system which accepts a job, registers the accepted job, and performs processing of the job, the method comprising:
a job accepting step of accepting a job;
a job registering step which registers the job accepted in the job accepting step;
a job processing step which performs processing of the job registered in the job registering step;
a stopping command accepting step which accepts a processing stopping command for the job; and
a control step which performs control in which registering is postponed for the job which is still in a process of being registered in the job registering step and has not yet been so registered when the processing stopping command is accepted in the stopping command accepting step.

7. A method as claimed in claim 6, comprising storing the job for which registration is postponed.

## Patentansprüche

1. Auftragsverarbeitungssystem (10), umfassend:
eine Auftragsannahmeeinheit (130, 101), welche zur Annahme eines Auftrags konfiguriert ist;
eine Auftragserfassungseinheit (102), welche konfiguriert ist, um den durch die Auftragsannahmeeinheit angenommen Auftrag zu erfassen;
eine Auftragsverarbeitungseinheit (120), welche konfiguriert ist, um das Verarbeiten des in der Auftragserfassungseinheit erfassten Auftrags auszuführen;
eine Stoppbefehl-Annahmeeinheit (101), welche konfiguriert ist, um einen Verarbeitungsstoppbefehl für die Auftragsverarbeitungseinheit (120) anzunehmen; und
eine Steuereinheit (102), welche konfiguriert ist, um eine Steuerung auszuführen, in welcher die Erfassung der Aufträge für Aufträge aufgeschoben wird, welche noch in der Auftragserfassungseinheit erfasst werden und noch nicht erfasst worden sind, wenn die Stoppbefehl-Annahmeeinheit den Verarbeitungsbefehl angenommen hatte, und um das Stoppen der Verarbeitung von erfassten Aufträgen zu veranlassen.

2. Auftragsverarbeitungssystem nach Anspruch 1, wobei die Auftragsverarbeitungseinheit (120) konfiguriert ist, um das Verarbeiten von mehreren Auftragstypen auszuführen; und
die Steuereinheit konfiguriert ist, um die Erfassung nur für Aufträge aufzuschieben, welche eines vorbestimmten Typs unter den mehreren Auftragstypen sind.

3. Auftragsverarbeitungssystem nach Anspruch 1 oder Anspruch 2, umfassend Steuermittel, welche konfiguriert sind, um zu veranlassen, dass das Verarbeiten eines Auftrags, welcher in der Auftragserfassungseinheit erfasst wurde, gestoppt wird, nur wenn die Stoppbefehl-Annahmeeinheit den Verarbeitungsstoppbefehl angenommen hat.

4. Auftragsverarbeitungssystem nach einem der Ansprüche 1 bis 3, umfassend eine Auftragsempfangseinheit (104r), welche konfiguriert ist, um Aufträge zu speichern, welche durch die Auftragsannahmeeinheit (10) angenommen wurden, wobei die Steuereinheit konfiguriert ist, um einen aufgeschobenen Auftrag in der Auftragsempfangseinheit zu halten.

5. Programm zum Verursachen, dass ein Computer in der Form von entsprechenden Einheiten der Auftragsannahmeeinheit; der Auftragserfassungseinheit; der Auftragsverarbeitungseinheit; der Stoppbefehl-Annahmeeinheit; und der Steuereinheit, in einem Auftragsverarbeitungssystem, nach einem der Ansprüche 1 bis 4 arbeitet.

6. Verfahren zur Auftragsverarbeitung in einem Auftragsverarbeitungssystem, welches einen Auftrag annimmt, den angenommenen Auftrag erfasst und die Verarbeitung des Auftrags ausführt, wobei das Verfahren umfasst:
einen Auftragsannahmeschritt bezüglich der Annahme eines Auftrags;
einen Auftragserfassungsschritt, welcher den in dem Auftragsannahmeschritt angenommenen Auftrag erfasst;
einen Auftragsverarbeitungsschritt, welcher die Verarbeitung des in dem Auftragserfassungsschritt erfassten Auftrag ausführt;
einen Stoppbefehl-Annahmeschritt, welcher einen Verarbeitungsstoppbefehl für den Auftrag annimmt; und
einen Steuerschritt, welcher die Steuerung ausführt, in welchem die Erfassung für den Auftrag aufgeschoben wird, welcher sich noch in einem Erfassungsprozess in dem Auftragserfassungsschritt befindet und noch nicht erfasst worden ist, wenn der Verarbeitungsstoppbefehl in dem Stoppbefehl-Annahmeschritt angenommen wird.

7. Verfahren nach Anspruch 6, umfassend das Speichern des Auftrags, für welchen die Erfassung aufgeschoben ist.

## Revendications

1. Système de traitement de tâches (10), comprenant :
une unité d'acceptation de tâche (130, 101) configurée de manière à accepter une tâche ;
une unité d'enregistrement de tâche (102) configurée de manière à enregistrer la tâche acceptée par l'unité d'acceptation de tâche ;
une unité de traitement de tâche (120) configurée de manière à mettre en œuvre un traitement de la tâche enregistrée dans l'unité d'enregistrement de tâche ;
une unité d'acceptation d'instruction d'arrêt (101) configurée de manière à accepter une instruction d'arrêt de traitement pour l'unité de traitement de tâche (120) ; et
une unité de commande (102) configurée de manière à mettre en œuvre une commande dans laquelle un enregistrement de tâches est reporté pour des tâches qui sont encore en cours d'enregistrement dans l'unité d'enregistrement de tâche, et qui n'ont pas encore été enregistrées lorsque l'unité d'acceptation d'instruction d'arrêt a accepté l'instruction d'arrêt de traitement, et à occasionner l'arrêt du traitement de tâches enregistrées.

2. Système de traitement de tâches selon la revendication 1, dans lequel :
l'unité de traitement de tâche (120) est configurée de manière à mettre en œuvre un traitement pour de multiples types de tâche ;
l'unité de commande est configurée de manière à reporter uniquement l'enregistrement de tâches d'un type prédéterminé parmi les multiples types de tâche.

3. Système de traitement de tâches selon la revendication 1 ou 2 :
comprenant un moyen de commande configuré de manière à faire en sorte que le traitement d'une tâche enregistrée dans l'unité d'enregistrement de tâche ne soit arrêté que lorsque l'unité d'acceptation d'instruction d'arrêt a accepté l'instruction d'arrêt de traitement.

4. Système de traitement de tâches selon l'une quelconque des revendications 1 à 3, comprenant une unité de réception de tâches (104r) configurée de manière à stocker des tâches acceptées par l'unité d'acceptation de tâche (101), dans lequel l'unité de commande est configurée de manière à maintenir une tâche reportée dans l'unité de réception de tâches.

5. Programme destiné à amener un ordinateur à fonctionner en qualité d'unités respectives de l'unité d'acceptation de tâche, de l'unité d'enregistrement de tâche, de l'unité de traitement de tâche, de l'unité d'acceptation d'instruction d'arrêt, et de l'unité de commande, dans un système de traitement de tâches selon l'une quelconque des revendications 1 à 4.

6. Procédé de traitement de tâches dans un système de traitement de tâches qui accepte une tâche, enregistre la tâche acceptée et met en œuvre un traitement de la tâche, le procédé comprenant :
une étape d'acceptation de tâche consistant à accepter une tâche ;
une étape d'enregistrement de tâche qui enregistre la tâche acceptée à l'étape d'acceptation de tâche ;
une étape de traitement de tâche qui met en œuvre un traitement de la tâche enregistrée à l'étape d'enregistrement de tâche ;
une étape d'acceptation d'instruction d'arrêt qui accepte une instruction d'arrêt de traitement pour la tâche ; et
une étape de commande qui met en œuvre une commande dans laquelle un enregistrement est reporté pour la tâche qui est encore en cours d'enregistrement à l'étape d'enregistrement de tâche, et qui n'a pas encore été enregistrée lorsque l'instruction d'arrêt de traitement est acceptée à l'étape d'acceptation d'instruction d'arrêt.

7. Procédé selon la revendication 6, comprenant l'étape consistant à stocker la tâche pour laquelle l'enregistrement est reporté.
